(19) Europäisches Patentamt / European Patent Office / Office européen des brevets

(11) **EP 4 664 178 A1**

(12) **EUROPEAN PATENT APPLICATION**
published in accordance with Art. 153(4) EPC

(43) Date of publication:
**17.12.2025 Bulletin 2025/51**

(21) Application number: **24760239.4**

(22) Date of filing: **15.02.2024**

(51) International Patent Classification (IPC):
**G02B 17/08** (2006.01)   **G02B 5/30** (2006.01)
**G02B 13/18** (2006.01)

(52) Cooperative Patent Classification (CPC):
**G02B 5/30; G02B 13/18; G02B 17/08**

(86) International application number:
**PCT/JP2024/005232**

(87) International publication number:
**WO 2024/176938 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.02.2023   JP 2023026970
14.02.2024   JP 2024020143**

(71) Applicant: **CANON KABUSHIKI KAISHA
Ohta-ku
Tokyo 146-8501 (JP)**

(72) Inventor: **KOBAYASHI, Yuma
Tokyo 146-8501 (JP)**

(74) Representative: **WESER & Kollegen
Patentanwälte PartmbB
Radeckestraße 43
81245 München (DE)**

(54) **OPTICAL SYSTEM AND IMAGING DEVICE**

(57)   [SOLUTION MEANS] An optical system 100 includes, in order from an object side to an image side, a first transmissive reflective surface HM1, a quarter waveplate QWP, and a second transmissive reflective surface HM2. The optical system is a primary imaging system. Light from the object side transmits through the first transmissive reflective surface and the quarter waveplate in this order, is reflected by the second transmissive reflective surface towards the object side, transmits through the quarter waveplate, is reflected by the first transmissive reflective surface towards the image side, transmits through the quarter waveplate and the second transmissive reflective surface in this order, and travels towards the image side. A distance zm1 on an optical axis from the first transmissive reflective surface to an image plane, and a focal length f of the optical system satisfy a predetermined conditional expression.

FIG. 3

**Description**

FIELD OF ART

The present invention relates to relates to an optical system.

BACKGROUND ART

Optical systems that having a reduced size and good optical performance have recently been demanded for image pickup apparatuses such as smartphones and mirrorless cameras. Examples of optical systems that have a reduced overall optical length and good optical performance include a periscope optical system disclosed in Patent Document 1 and a catadioptric optical system disclosed in Patent Document 2.

PRIOR ART DOCUMENT

PATENT DOCUMENT

Patent Document 1: PCT International Publication No. WO2019/156933
Patent Document 2: Japanese Patent Application Laid-Open No. 2013-015712

SUMMARY OF THE INVENTION

PROBLEMS TO BE SOLVED BY THE INVENTION

However, the periscope optical system disclosed in Patent Document 1 has difficulty in reducing the size in a direction perpendicular to the optical axis. Also, in the catadioptric optical system disclosed in Patent Document 2, it is difficult to make the light receiving element large relative to a transparent hole in a primary mirror, and to obtain high optical performance relative to the size of the optical system.
The present invention provides an optical system that is compact and has high optical performance.

MEANS TO SOLVE THE PROBLEM

An optical system according to one aspect of the present invention includes, in order from an object side to an image side, a first transmissive reflective surface, a quarter waveplate, and a second transmissive reflective surface. The optical system is a primary imaging system. Light from the object side transmits through the first transmissive reflective surface and the quarter waveplate in this order, is reflected by the second transmissive reflective surface towards the object side, transmits through the quarter waveplate, is reflected by the first transmissive reflective surface towards the image side, transmits through the quarter waveplate and the second transmissive reflective surface in this order, and travels towards the image side. The optical system satisfies the following conditional expression:

$$0.10 \leq zm1/f \leq 0.68$$

where zm1 is a distance on an optical axis from the first transmissive reflective surface to an image plane, and f is a focal length of the optical system.
Further objects and features of the present invention will become apparent from the following description of embodiments.

EFFECT OF THE INVENTION

The present invention can provide an optical system that is compact and has high optical performance.

BRIEF DESCRIPTION OF THE DRAWINGS

FIG. 1 is a schematic diagram illustrating an optical path in an optical system.
FIG. 2 is a schematic diagram illustrating an optical path in an optical system.
FIG. 3 is a sectional view of an optical system according to Example 1.
FIG. 4 is an aberration diagram of the optical system according to Example 1.
FIG. 5 is a sectional view of an optical system according to Example 2.
FIG. 6 is an aberration diagram of the optical system according to Example 2.
FIG. 7 is a sectional view of an optical system according to Example 3.
FIG. 8 is an aberration diagram of the optical system according to Example 3.
FIG. 9 is a sectional view of an optical system according to Example 4.
FIG. 10 is an aberration diagram of the optical system according to Example 4.
FIG. 11 is a sectional view of an optical system according to Example 5.
FIG. 12 is an aberration diagram of the optical system according to Example 5.
FIG. 13 is a sectional view of an optical system according to Example 6.
FIG. 14 is an aberration diagram of the optical system according to Example 6.
FIG. 15 is a sectional view of an optical system according to Example 7.
FIG. 16 is an aberration diagram of the optical system according to Example 7.
FIG. 17 is a sectional view of an optical system according to Example 8.
FIG. 18 is an aberration diagram of the optical system according to Example 8.
FIG. 19 is a sectional view of an optical system according to Example 9.
FIG. 20 is an aberration diagram of the optical system according to Example 9.
FIG. 21 is a sectional view of an optical system according to Example 10.
FIG. 22 is an aberration diagram of the optical system according to Example 10.
FIG. 23 is a sectional view of an optical system according to Example 11.
FIG. 24 is an aberration diagram of the optical system according to Example 11.
FIG. 25 is a sectional view of an optical system according to Example 12.
FIG. 26 is an aberration diagram of the optical system according to Example 12.

EMBODIMENTS FOR PRACTICING THE INVENTION

Referring now to the accompanying drawings, a detailed description will be given of examples according to the present invention.

The imaging optical system according to each example is an optical system that forms an object image on an image plane and acquires an image using a solid-state image sensor or photosensitive film disposed on the image plane.

The imaging optical system according to each example has a first transmissive reflective surface, a quarter waveplate (QWP), and a second transmissive reflective surface disposed in this order from the object side to the image side. Light from the object side transmits through the first transmissive reflective surface and the QWP in this order, and is reflected by the second transmissive reflective surface. The light then transmits through the QWP and is reflected by the first transmissive reflective surface, then transmits through the QWP and the second transmissive reflective surface, and goes to an imaging unit such as a solid-state image sensor or photosensitive film.

Here, the first transmissive reflective surface and the second transmissive reflective surface may not have a transmittance of 50% and a reflectance of 50%. The ratio of the transmittance to the reflectance for randomly polarized light is preferably in a range of 1:3 to 3:1. Randomly polarized light is light with Stokes parameters S0=1 and S1=S2=S3=0. The first transmissive reflective surface and the second transmissive reflective surface may absorb light.

A lens may be formed or bonded to both or one side of each transmissive reflective surface.

For example, a polymer film or liquid crystal alignment layer having birefringence may be used as the QWP. A laminate of such polymer films or liquid crystal alignment layers may also be used as the QWP. Properly laminating them can provide a phase difference close to a quarter of the wavelength over a wide wavelength range. In addition to the above, an inorganic wave plate from Dexerials Corporation may also be used as the QWP.

The QWP may be disposed by bonding it to the first transmissive reflective surface or the second transmissive reflective surface. The QWP may also be disposed as a separate member from these transmissive reflective surfaces. For example, the film may be inserted directly into the optical path, or the film may be bonded to a glass plate and then inserted into the optical path. Lenses may be formed or cemented to one or both sides of the QWP. For example, lenses may be formed on one or both sides of an inorganic waveplate as a substrate using wafer-level optics technology.

The imaging optical system according to each example satisfies the following conditional expression (1) where zm1 is a distance on the optical axis from the first transmissive reflective surface to the image plane, and f is a focal length of the imaging optical system:

$$0.10 \leq zm1/f \leq 0.68 \qquad \qquad ...(1)$$

In a case where zm1/f becomes lower than the lower limit of conditional expression (1), the optical path length of the folding portion of a light ray is not sufficiently secured, and an overall length of the imaging optical system increases. In a case where zm1/f becomes higher than the upper limit of conditional expression (1), the powers (refractive powers) of the first transmissive reflective surface and the second transmissive reflective surface cannot be increased. The small powers of these transmissive reflective surfaces increases the power ratio due to refraction. Thus, chromatic aberration increases and image quality deteriorates. Furthermore, due to the small powers of these transmissive reflective surfaces, it becomes difficult to significantly bend light incident from off-axis. Thus, an image circle becomes small, and it becomes difficult to achieve a wide angle and high image quality for an imaging system.

As described in "Introduction to Imaging Optical Systems: Fundamentals of Optical System Management" by Yoshiya Matsui, Japan Optomechatronics Association, 1988, pp. 45-48, a focal length is defined as a ratio of the height of a light ray incident parallel to the optical axis from infinity in the paraxial area to an exit angle of that light ray when it exits from the optical system. As defined in the above document, the sign of the focal length of an optical system that forms an intermediate image, i.e., a secondary imaging system, is negative.

In order to achieve both the performance and reduced size of the imaging optical system, the size of the entire imaging optical system may be as small as possible. Aberrations other than distortion also become smaller in proportion to the size reduction, and an imaging optical system that has a reduced size and high optical performance can be achieved. However, in such an imaging optical system, the size of the imaging surface also reduces, and the imaging system as a whole does not achieve high optical performance. This is because, while a solid-state image sensor or photosensitive film is disposed on the imaging surface, the pixel density of the solid-state image sensor and the resolution per area of the photosensitive film are technically limited. In addition, the diffraction limit determines the minimum pixel size that is significant. Thus, in order to achieve high image quality for an imaging system, the imaging optical system preferably has low aberration while supporting a large image circle.

The imaging optical system according to each example preferably satisfies the following conditional expression (2) where La is an overall length of the imaging optical system excluding an aperture stop, h is an image circle radius, and Fno is an F-number of the imaging optical system:

$$0.0 \leq La \times h \times Fno/f^2 \leq 2.6 \qquad \qquad ...(2)$$

The overall length of an imaging optical system excluding the aperture stop is the overall length of the imaging optical system excluding the aperture stop in an imaging optical system in which an aperture stop or a diaphragm with a fixed diameter that acts as a light shielding mask is disposed closest to the object. In other imaging optical systems, it is the overall length of the imaging optical system. The overall length of an imaging optical system is a distance on the optical axis from the optical surface closest to the object to the image plane. In other words, the overall length of an imaging optical system excluding the aperture stop may be a distance on the optical axis from the lens surface closest to the object to the image plane.

By definition, $La \times h \times Fno/f^2$ does not become lower than the lower limit of conditional expression (2). In a case where $La \times h \times Fno/f^2$ becomes higher than the upper limit of conditional expression (2), the incident angle of off-axis light on the image plane increases, the size of the exit pupil for the off-axis area decreases, and the resolution reduces due to diffraction, or the overall length increases, which is not preferable. Moreover, as the incident angle on the image plane increases, optical crosstalk is likely to occur undesirably in the surrounding pixels in a case where a solid-state image sensor is used as the image sensor.

The imaging optical system according to each example preferably satisfies the following conditional expression (3) where zp is a distance on the optical axis from the aperture stop to the image plane:

$$0.1 \leq zp/f \leq 1.2 \qquad \qquad ...(3)$$

In a case where the imaging optical system does not have an aperture stop, the surface that restricts the diameter of the light ray is the surface closest to the object, and zp is a distance on the optical axis from this surface closest to the object to the image plane. The aperture stop here is a diaphragm that can change the light transmitting area, such as an iris diaphragm or a Waterhouse diaphragm. The aperture stop does not necessarily require physical shielding, and may be of a type that controls the color density distribution by applying a voltage using an electrochromic element, for example.

In a case where zp/f becomes lower than the lower limit of conditional expression (3) and the imaging optical system has an aperture stop, shielding of an upper line of light is likely to occur undesirably due to the aperture stop. In a case where the imaging optical system does not have an aperture stop, the outer diameter of the lens tends to cause shielding of the upper line of light undesirably. In a case where zp/f becomes higher than the upper limit of conditional expression (3) and the imaging optical system has an aperture stop, shielding of the underline of light is likely to occur undesirably due to the aperture stop. In a case where the imaging optical system does not have an aperture stop, shielding of the underline of light is likely to occur undesirably due to the outer diameter of the lens. Light shielding can be reduced by increasing the diameter of the imaging optical system, but taking such a measure would increase the size of the entire imaging optical system. Such shielding of a light ray has the disadvantages of reducing the peripheral light amount and narrowing the image circle. In addition, since the area of the exit pupil is reduced, the frequency characteristic in the meridional direction deteriorates due to the diffraction phenomenon and the image quality decreases.

The imaging optical system according to each example preferably satisfies the following conditional expression (4) where $\Phi m1$ is a diameter of the first transmissive reflective surface, and $\Phi m2$ is a diameter of the second transmissive reflective surface. Here, the "diameter" refers to a diameter of the effective area of the transmissive reflective surface (area through which the effective light rays that contribute to imaging pass):

$$0.50 \leq \Phi m1/\Phi m2 \leq 1.25 \qquad ...(4)$$

In a case where $\Phi m1/\Phi m2$ becomes lower than the lower limit of conditional expression (4), the incident angle of off-axis light on the image plane increases, the size of the exit pupil for the off-axis area is reduced, and the resolution decreases due to diffraction, which is not preferable. Also, as the incident angle to the image plane increases, optical crosstalk is likely to occur undesirably in the surrounding pixels when a solid-state image sensor is used as the image sensor. In a case where $\Phi m1/\Phi m2$ becomes higher than the upper limit of conditional expression (4), the second transmissive reflective surface may shield the off-axis light, the size of the exit pupil for the off-axis area may be reduced, and the resolution may decrease undesirably due to diffraction. In a case where $\Phi m1/\Phi m2$ becomes higher than the upper limit of conditional expression (4), the size of the image circle is reduced, and the image quality of the imaging system may deteriorate undesirably.

The imaging optical system according to each example preferably satisfies the following conditional expression (5):

$$0.1 \leq h/(\Phi m2/2)/Fno \leq 1.2 \qquad ... \quad (5)$$

In a case where $h/(\Phi m2/2)/Fno$ becomes lower than the lower limit of conditional expression (5), the lens diameter is reduced for the size of the imaging surface, and it becomes undesirably difficult to improve the optical performance of the imaging system although the size of the imaging optical system increases. Also, in an attempt to achieve high image quality in a possible range using a small imaging unit, the sensitivity of each surface increases, and the yield is reduced during manufacturing, which is not preferable. In a case where $h/(\Phi m2/2)/Fno$ becomes higher than the upper limit of conditional expression (5), the incident angle of off-axis light on the image plane increases, the size of the exit pupil for the off-axis area is reduced, and the resolution decreases due to diffraction or the overall length increases undesirably. Also, as the incident angle on the image plane increases, optical crosstalk is likely to occur undesirably in peripheral pixels when a solid-state image sensor is used as the image sensor.

The imaging optical system according to each example preferably satisfies the following conditional expression (6) where zm2 is a distance on the optical axis from the second transmissive reflective surface to the image plane:

$$0.0 \leq zm2/La \leq 0.5 \qquad ... \quad (6)$$

By definition, zm2/La does not become lower than the lower limit of conditional expression (6). In a case where zm2/La becomes higher than the upper limit of conditional expression (6), the optical path length of folding the light ray is reduced, and the overall length increases undesirably.

The imaging optical system according to each example preferably satisfies the following conditional expression (7) where $\Phi m1L$ is an absolute value of the refractive power of the lens including the second transmissive reflective surface:

$$0.0 \leq \Phi m1L \times f \leq 1.0 \qquad ... \quad (7)$$

By definition, $\Phi$m1L$\times$f does not become lower than the lower limit of conditional expression (7). In a case where $\Phi$m1L$\times$f becomes higher than the upper limit of conditional expression (7), the refractive power at the high light-ray height position increases, it causes large longitudinal chromatic aberration and deteriorates image quality undesirably.

The imaging optical system according to each example preferably satisfies the following conditional expression (8) where A$\Phi$r is an average value of the absolute values of the refractive powers of a plurality of lenses included in the imaging optical system, and A$\Phi$m is an average value of the absolute values of the powers (refractive powers) of the first transmissive reflective surface and the second transmissive reflective surface. The power (reflective power) of a reflective surface corresponds to the reciprocal of the paraxial focal length of the reflective surface, and for example, if the surface is spherical, it is the reciprocal of the paraxial radius of curvature multiplied by -2. Even when a reflective surface is used as a back-surface mirror, the reflective component of the power is the reciprocal of the paraxial radius of curvature multiplied by -2 (for example, if the shape is spherical), so this value is used to calculate A$\Phi$r.

$$0.0 \leq A\Phi r/A\Phi m \leq 0.5 \qquad\qquad ... \quad (8)$$

In the lens disposed between the first transmissive reflective surface and the second transmissive reflective surface, the light transmits through the lens three times, but in calculating A$\Phi$r, it is assumed that the light transmits through the lens only once.

By definition, A$\Phi$r/A$\Phi$m does not become lower than the lower limit of conditional expression (8). In a case where A$\Phi$r/A$\Phi$m becomes higher than the upper limit of conditional expression (8), the refractive power becomes more dominant than the reflective power in the entire imaging optical system. By nature, a reflective surface does not produce chromatic aberration during reflection. On the other hand, refraction of a lens causes chromatic aberration. Thus, in a case where the refractive power in the entire system increases, longitudinal and lateral chromatic aberrations appear and image quality deteriorate undesirably. In addition, by satisfying conditional expression (8), chromatic aberration is less likely to occur for the above reasons, so the imaging optical system can be an optical system that can perform imaging from the visible range to the infrared range, or an optical system that can perform imaging over a wide infrared wavelength range. In this case, a quarter waveplate or a transmissive reflective surface is preferably one that can fully demonstrate their respective functions in the use wavelength range.

The imaging optical system according to each example preferably satisfies the following conditional expression (9):

$$0.0 \leq La \times h/f^2 \leq 2.0 \qquad\qquad ...(9)$$

By definition, La$\times$h/f$^2$ does not become lower than the lower limit of conditional expression (9). In a case where La$\times$h/f$^2$ becomes higher than the upper limit of conditional expression (9), the incident angle of off-axis light on the image plane increases, the size of the exit pupil for the off-axis area is reduced, and the resolution decreases due to diffraction or the overall length increases undesirably. In a case where the incident angle on the image plane increases, optical crosstalk is likely to occur undesirably in surrounding pixels when a solid-state image sensor is used as the image sensor.

In the imaging optical system according to each example, light loss occurs due to the first and second transmissive reflective surfaces. Thus, in a case where the F-number increases, the light amount reaching the image sensor reduces. Therefore, the imaging optical system according to each example preferably satisfies the following conditional expression (10):

$$0.5 \leq Fno \leq 8.0 \qquad\qquad ...(10)$$

In the imaging optical system according to each example, one or both of the first transmissive reflective surface and the second transmissive reflective surface may be flat undesirably. Thereby, the imaging optical system can be easily manufactured.

Numerical ranges in conditional expressions (1) to (10) are preferably ranges of conditional expressions (1a) to (10a) below:

$$0.10 \leq zm1/f \leq 0.67 \qquad\qquad ...(1a)$$

$$0.0 \leq La \times h \times Fno/f^2 \leq 2.5 \qquad ...(2a)$$

$$0.1 \leq zp/f \leq 1.0 \qquad ...(3a)$$

$$0.60 \leq \Phi m1/\Phi m2 \leq 1.20 \qquad ...(4a)$$

$$0.1 \leq h/(\Phi m2/2)/Fno \leq 1.1 \qquad ...(5a)$$

$$0.00 \leq zm2/La \leq 0.48 \qquad ...(6a)$$

$$0.0 \leq \Phi m1L \times f \leq 0.7 \qquad ...(7a)$$

$$0.0 \leq A\Phi r/A\Phi m \leq 0.3 \qquad ...(8a)$$

$$0.0 \leq La \times h/f^2 \leq 1.8 \qquad ...(9a)$$

$$0.8 \leq Fno \leq 6.0 \qquad ...(10a)$$

Numerical ranges in conditional expressions (1) to (10) are preferably ranges of conditional expressions (1b) to (10b) below:

$$0.10 \leq zm1/f \leq 0.65 \qquad ...(1b)$$

$$0.0 \leq La \times h \times Fno/f^2 \leq 2.4 \qquad ...(2b)$$

$$0.1 \leq zp/f \leq 0.95 \qquad ...(3b)$$

$$0.60 \leq \Phi m1/\Phi m2 \leq 1.10 \qquad ...(4b)$$

$$0.1 \leq h/(\Phi m2/2)/Fno \leq 1.0 \qquad ...(5b)$$

$$0.00 \leq zm2/La \leq 0.46 \qquad ...(6b)$$

$$0.0 \leq \Phi m1L \times f \leq 0.5 \qquad ...(7b)$$

$$0.00 \leq A\Phi r/A\Phi m \leq 0.25 \qquad ...(8b)$$

$$0.0 \leq La \times h/f^2 \leq 1.7 \qquad ...(9b)$$

$$1.0 \leq Fno \leq 4.0 \qquad ...(10b)$$

Numerical ranges in conditional expressions (1) to (10) are preferably ranges of conditional expressions (1c) to (10c) below:

$$0.10 \leq zm1/f \leq 0.55 \qquad ...(1c)$$

$$0.0 \leq La \times h \times Fno/f^2 \leq 2.0 \qquad ...(2c)$$

$$0.1 \leq zp/f \leq 0.65 \qquad ...(3c)$$

$$0.60 \leq \Phi m1/\Phi m2 \leq 1.05 \qquad ...(4c)$$

$$0.1 \leq h/(\Phi m2/2)/Fno \leq 0.8 \qquad ...(5c)$$

$$0.00 \leq zm2/La \leq 0.15 \qquad ...(6c)$$

$$0.0 \leq \Phi m1L \times f \leq 0.35 \qquad ...(7c)$$

$$0.00 \leq A\Phi r/A\Phi m \leq 0.15 \qquad ...(8c)$$

$$0.0 \leq La \times h/f^2 \leq 1.0 \qquad ...(9c)$$

$$1.0 \leq Fno \leq 2.5 \qquad ...(10c)$$

Either the first transmissive reflective surface or the second transmissive reflective surface is preferably a surface that separates the incident light into reflected light and transmitting light according to the polarization state. More specifically, as described below, a polarization selective transmissive reflective element is preferably used as either the first transmissive reflective surface or the second transmissive reflective surface. Examples of polarization selective transmissive reflective elements include those manufactured by Asahi Kasei Corporation under the product name "WGF," those manufactured by 3M Company under the product name "IQPE," and those manufactured by MOXTEK under the product name "ProFlux." The other transmissive reflective surface can be, for example, a half-mirror. When a half-mirror is used, the amount of randomly polarized light incident from the object side is reduced to 12.5% or less by the time it reaches the image plane.

Cholesteric liquid crystals and holographic optical elements may also be used as transmissive reflective surfaces.

In the imaging optical system according to each example, the polarization selective transmissive reflective element may be an optical element that is created by forming a grid on the lens reflective surface during lens molding and then evaporating, printing, or lithographing a metal or dielectric on the grid.

A shape of an effective area of each of a plurality of lens surfaces included in the imaging optical system according to each example is preferably rotationally symmetric with respect to the optical axis. In a case where the imaging optical system is rotationally symmetrical in the effective area of each optical surface, a positioning method of each optical element can be simplified. In a case where the imaging optical system is rotationally symmetrical including the outer shape of each optical element, the ease of manufacture can be further improved.

In the imaging optical system according to each example, for example, the following configuration can suppress a decrease in the light amount in the normal imaging optical path while reducing ghost light (unnecessary light leakage) from the optical path that transmits through the transmissive reflective surface without being reflected even once.

CONFIGURATION 1 UTILIZING POLARIZATION

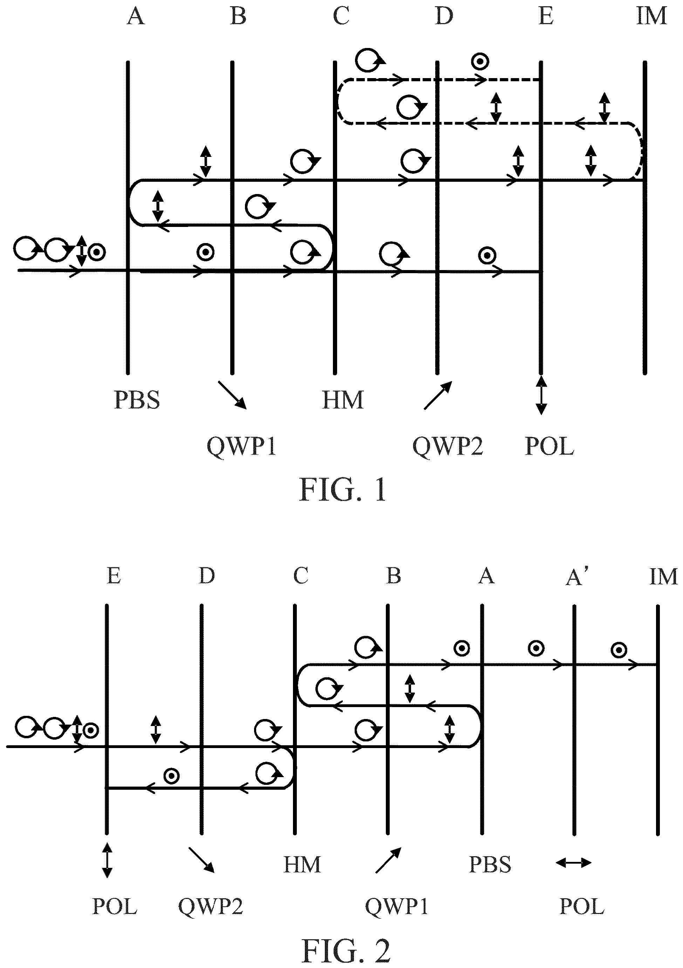

Referring now to FIG. 1, a description will be given of the configuration utilizing polarization. The imaging optical system using this configuration has two transmissive reflective surfaces. Here, the transmissive reflective surface located on the object side of the imaging optical system using this configuration is a polarization selective transmissive reflective element (PBS): A. The transmissive reflective surface located on the image plane side of the imaging optical system using this configuration is a half-mirror (HM): C. A first quarter waveplate (QWP1): B is disposed between the polarization selective transmissive reflective element PBS and the half-mirror HM. A second quarter waveplate (QWP2): D and a linear polarizer (POL): E are disposed between the half-mirror HM and the imaging surface IM in this order from the object side to the image side.

Here, the polarization selective transmissive reflective element A is an element configured to reflect linearly polarized light polarized in the same direction as when it transmitted through the linear polarizer E, and to transmit linearly polarized light orthogonal to the linear polarizer. The polarization selective transmissive reflective element A is, for example, a wire grid polarizer or a reflective polarizer having a laminated retardation film configuration. In this case, the wire grid forming surface or retardation film surface of the polarization selective transmissive reflective element A functions as a transmissive reflective surface. A wire grid polarizer does not necessarily have to be one in which metal wires are aligned, as long as it has thin metal or dielectric layers at a specified distance and functions as a polarization selective transmissive reflective element. For example, an element in which metal or dielectric layers are aligned by vapor deposition can be used.

The first quarter waveplate B and the second quarter waveplate D are arranged with their slow axes tilted by 45° relative to the polarization transmission axis of the linear polarizer E. The first quarter waveplate B and the second quarter waveplate D are preferably arranged with their slow axes tilted by 90°. This arrangement cancels out the wavelength dispersion characteristics of the wavelength plates when light transmits through the first quarter waveplate B and the second quarter waveplate D.

The half-mirror C is a half-mirror formed, for example, by a dielectric multilayer film or metal deposition, and the mirror surface of the half-mirror C functions as a transmissive reflective surface. The linear polarizer E is, for example, an absorptive linear polarizer.

Next follows a description of the optical path selection and operation in the polarization utilization configuration.

Light incident on the imaging optical system from the object side becomes linearly polarized light by the polarization selective transmissive reflective element A, becomes circularly polarized light by the first quarter waveplate B, and enters the half-mirror C. A portion of the light that reaches the half-mirror C is reflected and becomes circularly polarized in the reverse direction, and returns to the first quarter waveplate B.

The reverse-circularly polarized light that has returned to the first quarter waveplate B is returned to the polarization selective transmissive reflective element A by the first quarter waveplate B as linearly polarized light polarized in a direction orthogonal to the direction when the light first passed through the polarization selective transmissive reflective element A. The light that has returned to the polarization selective transmissive reflective element A is reflected by the polarization selective transmissive reflective element A. Here, due to the polarization selectivity of the polarization selective transmissive reflective element A, linearly polarized light polarized in a direction orthogonal to the direction when the light first passed through the polarization selective transmissive reflective element A is reflected.

On the other hand, a part of the light that has reached the half-mirror C transmits through it and becomes linearly polarized by the second quarter waveplate D in the same direction as when the light passed through the polarization selective transmissive reflective element A, and enters the linear polarizer E and is absorbed by the linear polarizer E.

The light reflected by the polarization selective transmissive reflective element A is circularly polarized by the first quarter waveplate B and enters the half-mirror C. A part of the light that reaches the half-mirror C transmits it and enters the second quarter waveplate D. The second quarter waveplate D causes the incident light to become linearly polarized light parallel to the linearly polarized light reflected by the polarization selective transmissive reflective element A. The light that has passed through the second quarter waveplate D enters the linear polarizer E. Here, the polarization of the light and the transmission axis of the linear polarizer E coincide, so most of the light transmits through it and is guided to the imaging surface IM.

Due to the above operation, only the light that has transmitted through the polarization selective transmissive reflective element PBS, been reflected by the half-mirror C, been reflected by the polarization selective transmissive reflective element PBS, and transmitted through the half-mirror C is guided to the imaging surface IM.

Solid-state image sensors and Charge Coupled Devices (CCDs) that can be used as the imaging surface IM generally have high surface reflectance. In this configuration, the light reflected by the imaging surface IM transmits through the linear polarizer E again and is converted into circularly polarized light by the second quarter waveplate D. Thereafter, the light emitted from the second quarter waveplate D is reflected by the half-mirror C, becomes circularly polarized light in the opposite direction, and transmits through the second quarter waveplate D again. At this time, the circularly polarized light is converted by the second quarter waveplate D into linearly polarized light in a direction orthogonal to that of the light that was just before passing through the linear polarizer E. Since the direction of this linearly polarized light is orthogonal to the transmission axis of the linear polarizer E, most of the light is absorbed by the linear polarizer E. In this manner, in this configuration, most of the light that is reflected by the imaging surface IM and the half-mirror C in this order is cut off, and ghosts and flares related to the imaging surface IM are less noticeable. In order to obtain such a reflection reducing effect, an optical low-pass filter using birefringence does not preferably exist between the imaging surface IM and the linear polarizer E. This is because the optical low-pass filter causes the polarization state to shift from the desired polarization state.

In this configuration, a quarter waveplate may be disposed between the polarization selective transmissive reflective element A and the object. In this case, the quarter waveplate is disposed so that the fast axis or slow axis of the quarter waveplate forms an angle of 45° relative to the transmission axis of the polarization selective transmissive reflective element A. Thus, even if the light incident from the object side is linearly polarized light, imaging can be performed regardless of its polarization direction. In addition, a depolarizing element may be placed instead of the quarter waveplate. For example, "Cosmoshine SRF" by Toyobo Co., Ltd. can be used as the depolarizing element.

CONFIGURATION 2 UTILIZING POLARIZATION

Referring now to FIG. 2, a description will be given of a configuration utilizing polarization. The imaging optical system using this configuration includes two transmissive reflective surfaces. Here, the transmissive reflective surface disposed on the object side of the imaging optical system using this configuration is a half-mirror (HM): C. The transmissive reflective surface disposed on the imaging surface side of the imaging optical system using this configuration is a polarization selective transmissive reflective element (PBS): A. A first quarter waveplate (QWP1): B is disposed between the polarization selective transmissive reflective element PBS and the half-mirror HM. A linear polarizer (POL): E and a second quarter waveplate (QWP2): D are arranged in this order from the object side to the image side between the half-mirror HM and the object surface.

Here, the configuration of each polarizing element and the preferable arrangement of the optical axis orientation are the same as those of the configuration 1 utilizing polarization.

Next follows a description of the optical path selection and operation in the configuration utilizing polarization.

Light entering the imaging optical system from the object side becomes linearly polarized light by the linear polarizer E, becomes circularly polarized by the second quarter waveplate D, and enters the half-mirror C. Part of the light that reaches the half-mirror C is reflected and becomes circularly polarized light in the opposite direction, and returns to the second quarter waveplate D.

The light that has reached the half-mirror C and been reflected becomes circularly polarized light in the opposite direction to that at the time of incidence. This light becomes linearly polarized light by the second quarter waveplate D in a direction orthogonal to that when it passed through the linear polarizer E, and enters the linear polarizer E and is absorbed by it.

On the other hand, the light that has transmitted through the half-mirror C becomes linearly polarized light by the first quarter waveplate B in the same direction as that of the light that was polarized immediately after transmitting through the linear polarizer E. This linearly polarized light is reflected by the polarization selective transmissive reflective element A and returns to the first quarter waveplate B. Thereafter, the light is converted into circularly polarized light by the first quarter waveplate B, and a part of it is reflected by the half-mirror C. The light reflected by the half-mirror C enters the first quarter waveplate B again and is converted into linearly polarized light whose polarization direction is orthogonal to that when it was reflected by the polarization selective transmissive reflective element A. This linearly polarized light transmits through the polarization selective transmissive reflective element A and is guided to the imaging surface IM.

Due to the above operation, only the light that has transmitted through the half-mirror C, been reflected by the polarization selective transmissive reflective element PBS, been reflected by the half-mirror C, and transmitted through the polarization selective transmissive reflective element PBS is guided to the imaging surface IM.

In this arrangement, a linear polarizer A' may be disposed between the polarization selective transmissive reflective element A and the imaging surface IM. In this case, the transmission axes of the linear polarizer A' and the polarization selective transmissive reflective element A coincide. Thus, light that is reflected by the imaging surface IM, further reflected by the polarization selective transmissive reflective element A, and then again enters the imaging surface IM to cause ghosts and flares can be absorbed.

In this configuration, a quarter waveplate may be disposed between the linear polarizer E and the object. In this case, the quarter waveplate is placed so that the fast axis or slow axis of the quarter waveplate forms an angle of 45° relative to the transmission axis of the linear polarizer E. Thus, even if the light incident from the object side is linearly polarized light, imaging can be performed regardless of its polarization direction. A depolarizing element may be disposed instead of the quarter waveplate. For example, Toyobo Co., Ltd.'s "Cosmoshine SRF" can be used as the depolarizing element.

In the above description of the configuration, terms such as orthogonal, parallel, and 45° are used, but they do not have to be strictly 90°, 0°, and 45°. However, they are to be within ±5°, preferably within ±2°, or more preferably with ±1° of the set angle.

In the imaging optical system according to each example, the lens may be made of a polymer material or a glass material. However, a lens disposed between the first transmissive reflective surface and the second transmissive reflective surface may have low birefringence.

In the above two configurations, the quarter waveplate may be, for example, a polymer film such as "WA-140T" manufactured by Nippon Kayaku Co., Ltd., "CP3" manufactured by ColorLink Japan Co., Ltd., or "ZEONORFILM" manufactured by Zeon Corporation. In addition, for example, Astropribor's product names "APAW," "APSAW-5," and "APSAW-7" and Thorlabs' product names "Super Achromatic Waveplate" (model numbers: SAQWP05M-700, SAQWP05M-1700, etc.) and "Achromatic Waveplate" (model numbers: AQWP05M-600, AQWP05M-580, AQWP10M-580, etc.) may be used.

Regarding the quarter waveplate placed between two transmissive reflective surfaces, in a case where its characteristic is insufficient (i.e., it deviates from the ideal characteristic of providing only a retardation of exactly a quarter wavelength, and provides a phase difference that is too large or too small, or has a component that acts as a depolarizer or optical rotator), ghost flare increases. More specifically, for example, in a case where the phase difference deviates from a quarter wavelength, the light that is reflected twice by each of the two transmissive reflective surfaces will reach the image plane as ghost flare. For light incident on the optical axis, in a case where the phase difference provided by the quarter waveplate is $\delta$ (degrees), the intensity of the ghost light is expressed as $\{(1-\cos(2\delta))^2\} \times (1+\cos(2\delta)) \times a/64$ (where a is a constant that summarizes the absorption, reflection, and other elements of each lens in the optical system). The calculations here assume ideal characteristics for the polarizing plate (i.e., it absorbs all polarized light in the absorption axis direction and transmits all polarized light in the transmission axis direction). This ghost light is provisionally called a five-pass ghost.

Since a light amount on a normal light path (which may be a light path through which a light ray may transmit in that way) explained in the above configuration description is $(1-\cos(2\delta))^2 \times a/16$, a ratio of a light amount on the normal light and a five-pass ghost light path is $4/(1+\cos(2\delta))$. Therefore, in a case where a phase difference provided by the quarter waveplate shifts from 90°, the light amount on the five-pass ghost increases rapidly relative to the normal light, and a strong ghost occurs.

Thus, in the use wavelength band (a wavelength band that is mainly used), the following conditional expressions (11a) and (12a) may be satisfied where a22 is a 2-by-2 element of a Mueller matrix corresponding to a quarter waveplate disposed between two transmissive reflective surfaces, and a32 is a 3-by-2 element of the Mueller matrix:

$$-0.25 \leq a22 \leq 0.25 \qquad ...(11a)$$

$$-0.25 \leq a32 \leq 0.25 \qquad ...(12a)$$

Thereby, a five-pass ghost can be sufficiently suppressed. The Mueller matrix is the one when the quarter waveplate is viewed from the incident side when linearly polarized light is perpendicularly incident on the quarter waveplate, and is expressed in a case where an angle between an axis corresponding to a fast axis (or slow axis) and incident polarized light is 45°. The wavelength region to be mainly used is a region in which the light receiver, such as an image sensor or photosensitive film, has sufficient sensitivity and the reflection and absorption in the optical system is sufficiently small. In addition, in a case where the wavelength of the incident light is limited, the spectral spectrum of the incident light is also taken into consideration. More specifically, the wavelength region to be used is the region in which the product of the sensitivity of the light receiver, the efficiency of the optical system, and the spectrum of the incident light is 10% or more or 20% or more of the peak.

Conditional expressions (11a) and (12a) are preferably replaced with conditional expressions (11b) and (12b) below or more preferably replaced with conditional expressions (11c) and (12c) below, or most preferably replaced with conditional expressions (11d) and (12d) below:

$$-0.20 \leq a22 \leq 0.20 \qquad ...(11b)$$

$$-0.20 \leq a32 \leq 0.20 \qquad ...(12b)$$

$$-0.10 \leq a22 \leq 0.10 \qquad ...(11c)$$

$$-0.10 \leq a32 \leq 0.10 \qquad ...(12c)$$

$$-0.05 \leq a22 \leq 0.05 \qquad ...(11d)$$

$$-0.05 \leq a32 \leq 0.05 \qquad ...(12d)$$

Examples of quarter waveplate configurations that satisfy these conditional expressions over the entire visible range (e.g. 420nn to 680 nm) may include an HQ type quarter waveplate that is made by stacking a half waveplate with its optical axis tilted by about 15° relative to the incident polarization direction, a quarter waveplate with its optical axis tilted by about 75°, and a Pancharatnam type quarter waveplate that combines two half waveplates and one quarter waveplate at a predetermined angle (such as typically with its optical axes at 6.5°, 34.57°, and 101.13° relative to the incident polarization direction), and they are preferable for use with the present invention.

The aforementioned "CP3," "APSAW-5," "APSAW-7," and "super achromatic waveplates" are such Pancharatnam type waveplates.

A quarter waveplate with a characteristic close to that of the above waveplate is preferably used for the other quarter waveplate (i.e., D in FIGs. 1 and 2). Each of these two quarter waveplates once acts on light that is not reflected even once by the two transmissive reflective surfaces, to cancel it out, preventing the light from reaching the image plane. Thus, the characteristics of the two quarter waveplates are preferably as nearly identical as possible, since the cancellation of the characteristics is nearly complete.

The optical system according to each example may be an optical system that does not form an intermediate image (does not form an intermediate image), i.e., a primary imaging system. In a primary imaging system, an image plane is formed at a position where the incident light is first focused. This configuration can reduce the overall length of the optical system. The primary imaging system may not strengthen the power of each lens compared to an optical system that forms an intermediate image, i.e., a secondary imaging system, and thus can more easily correct aberration than with the secondary imaging system.

The configuration of the imaging optical system according to each example will be described below.

EXAMPLE 1

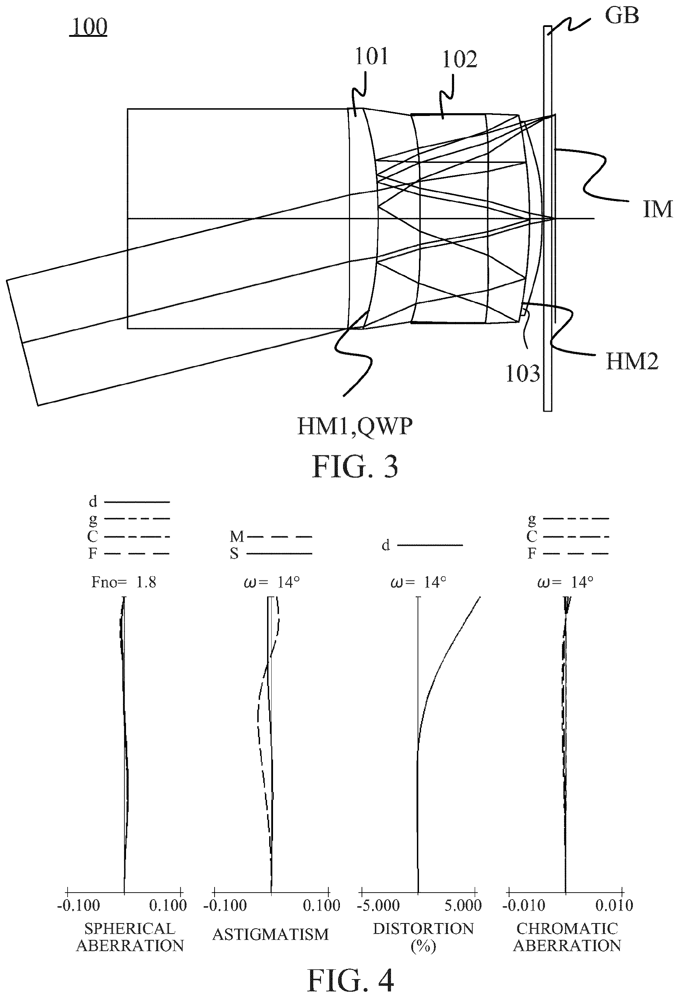

An imaging optical system 100 according to Example 1 will be described with reference to FIG. 3. FIG. 3 is a sectional view of the imaging optical system 100. The imaging optical system 100 includes, in order from the object side to the image side, a first lens 101 having a first transmissive reflective surface HM1, a second lens 102, a third lens 103 having a second transmissive reflective surface HM2, and a sensor protective glass GB. The first lens 101 has a quarter waveplate QWP on the image side of the first transmissive reflective surface HM1.

FIG. 4 is an aberration diagram when the imaging optical system 100 is in an in-focus state at infinity, at the wavelengths of the d-line, F-line, C-line, and g-line.

This imaging optical system 100 performs focusing by moving the first lens 101, the second lens 102, and the third lens 103 as an integrated unit in the optical axis direction.

EXAMPLE 2

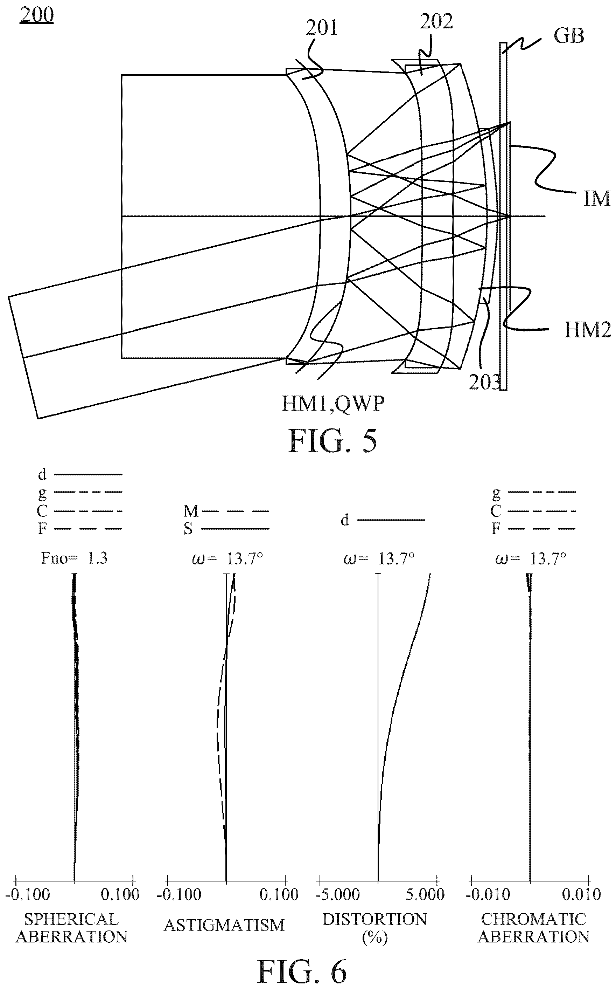

An imaging optical system 200 according to Example 2 will be described with reference to FIG. 5. FIG. 5 is a sectional view of the imaging optical system 200. The imaging optical system 200 includes, in order from the object side to the image side, a first lens 201 having a first transmissive reflective surface HM1, a second lens 202, a third lens 203 having a second transmissive reflective surface HM2, and a sensor protective glass GB. The first lens 201 includes a quarter waveplate QWP on the image side of the first transmissive reflective surface HM1.

FIG. 6 is an aberration diagram when the imaging optical system 200 is in an in-focus state at infinity, at the wavelengths of the d-line, F-line, C-line, and g-line.

This imaging optical system 200 performs focusing by moving the first lens 201, the second lens 202, and the third lens 203 as an integrated unit in the optical axis direction.

EXAMPLE 3

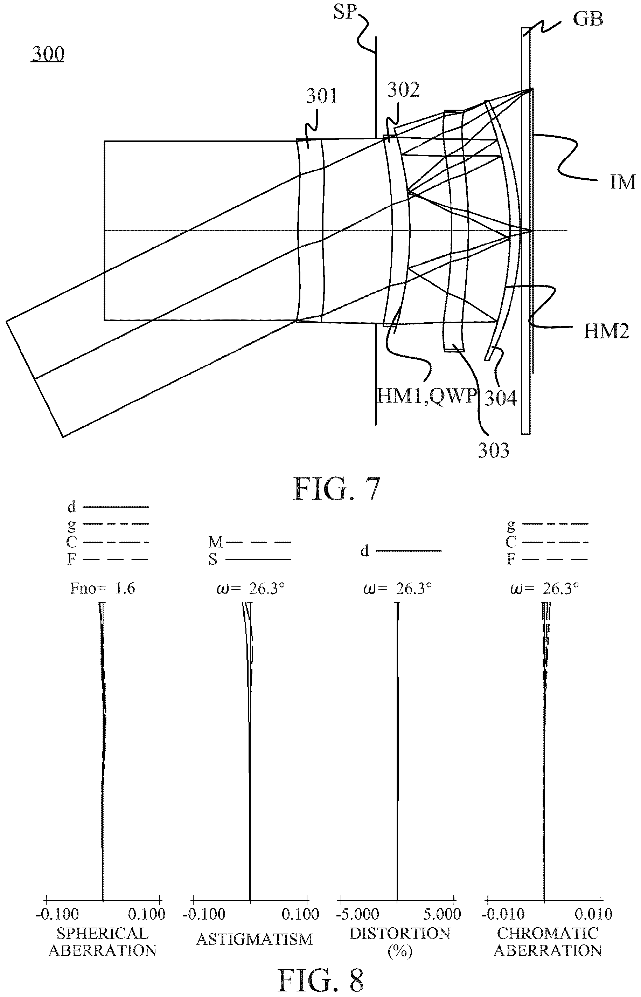

An imaging optical system 300 according to Example 3 will be described with reference to FIG. 7. FIG. 7 is a sectional view of the imaging optical system 300. The imaging optical system 300 includes, in order from the object side to the image side, a first lens 301, an aperture stop SP, a second lens 302 having a first transmissive reflective surface HM1, a third lens 303, a fourth lens 304 having a second transmissive reflective surface HM2, and a sensor protective glass GB. The second lens 302 includes a quarter waveplate QWP on the image side of the first transmissive reflective surface HM1.

FIG. 8 is an aberration diagram when the imaging optical system 300 is in an in-focus state at infinity, at the wavelengths of the d-line, F-line, C-line, and g-line.

This imaging optical system 300 performs focusing by moving the first lens 301, the second lens 302, the third lens 303, and the fourth lens 304 as an integrated unit in the optical axis direction.

EXAMPLE 4

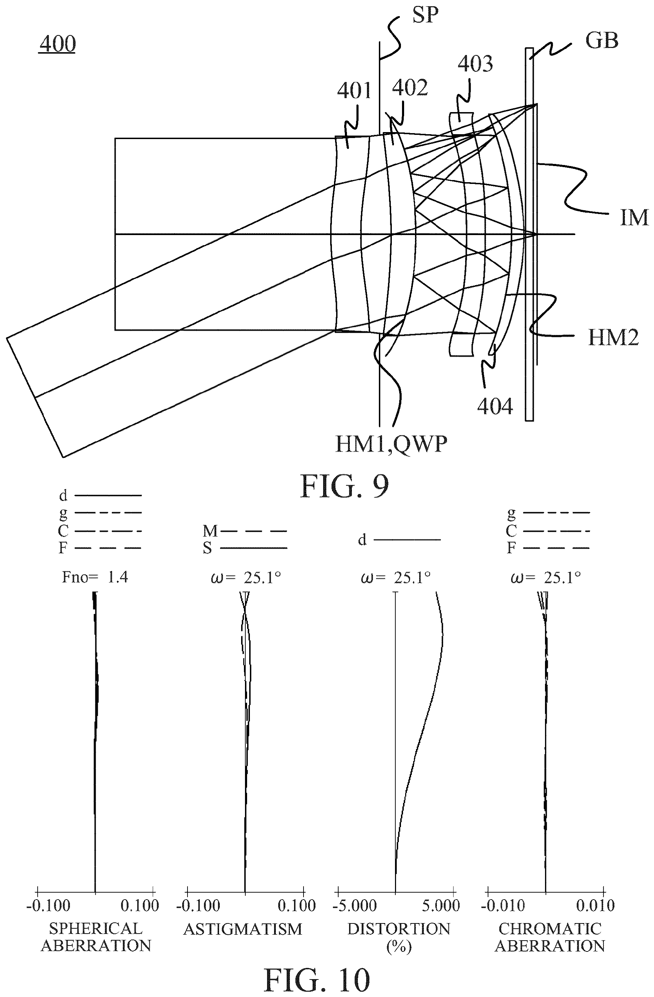

An imaging optical system 400 according to Example 4 will be described with reference to FIG. 9. FIG. 9 is a sectional view of the imaging optical system 400. The imaging optical system 400 includes, in order from the object side to the image side, a first lens 401, an aperture stop SP, a second lens 402 having a first transmissive reflective surface HM1, a third lens 403, a fourth lens 404 having a second transmissive reflective surface HM2, and a sensor protective glass GB. The second lens 402 includes a quarter waveplate QWP on the image side of the first transmissive reflective surface HM1.
FIG. 10 is an aberration diagram when the imaging optical system 400 is in an in-focus state at infinity, at the wavelengths of the d-line, F-line, C-line, and g-line.
This imaging optical system 400 performs focusing by moving the first lens 401, second lens 402, third lens 403, and fourth lens 404 as an integrated unit in the optical axis direction.

EXAMPLE 5

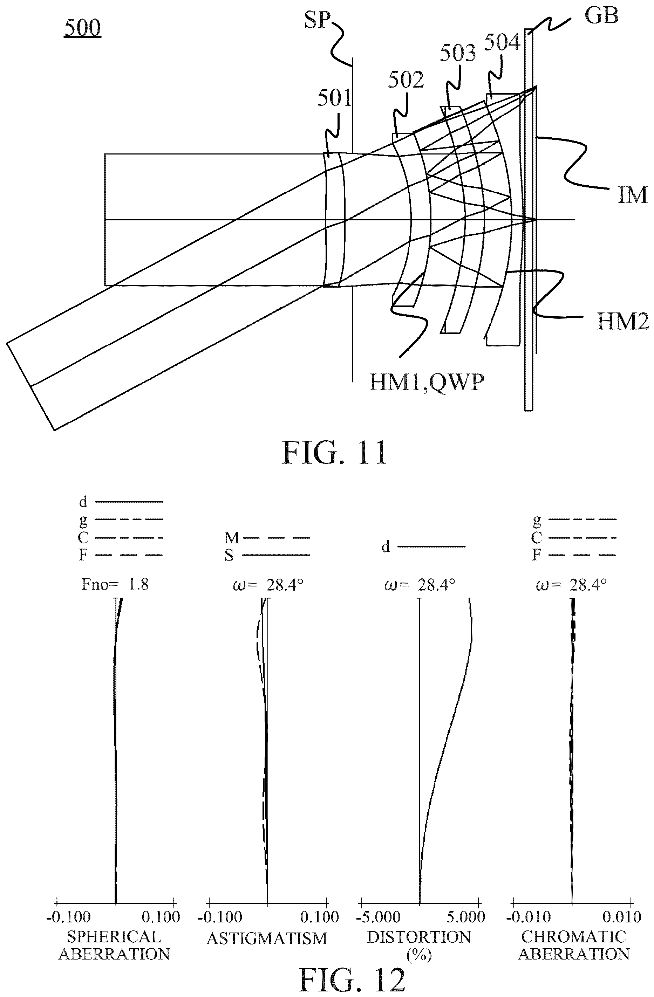

An imaging optical system 500 according to Example 5 will be described with reference to FIG. 11. FIG. 11 is a sectional view of the imaging optical system 500. The imaging optical system 500 includes, in order from the object side to the image side, a first lens 501, an aperture stop SP, a second lens 502 having a first transmissive reflective surface HM1, a third lens 503, a fourth lens 504 having a second transmissive reflective surface HM2, and a sensor protective glass GB. The second lens 502 includes a quarter waveplate QWP on the image side of the first transmissive reflective surface HM1.
FIG. 12 illustrates an aberration diagram when the imaging optical system 500 is in an in-focus state at infinity, at the wavelengths of the d-line, F-line, C-line, and g-line.
This imaging optical system 500 performs focusing by moving the first lens 501, second lens 502, third lens 503, and fourth lens 504 as an integrated unit in the optical axis direction.

EXAMPLE 6

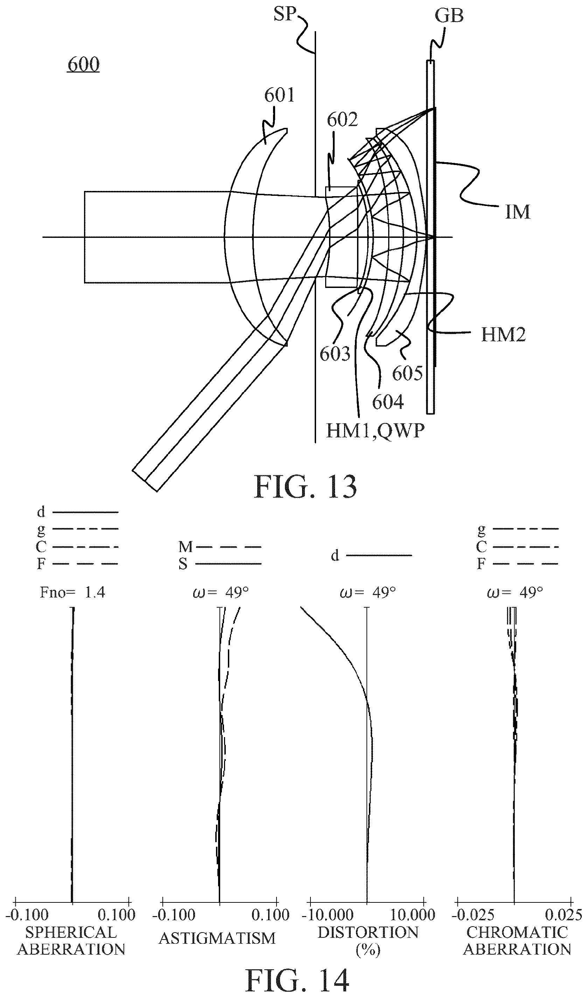

An imaging optical system 600 according to Example 6 will be described with reference to FIG. 13. FIG. 13 is a sectional view of the imaging optical system 600. The imaging optical system 600 includes, in order from the object side to the image side, a first lens 601, an aperture stop SP, a second lens 602, a third lens 603 having a first transmissive reflective surface HM1, a fourth lens 604, a fifth lens 605 having a second transmissive reflective surface HM2, and a sensor protective glass GB. The third lens 603 also includes a quarter waveplate QWP on the image side of the first transmissive reflective surface HM1.
FIG. 14 is an aberration diagram when the imaging optical system 600 is in an in-focus state at infinity, at the wavelengths for the d-line, F-line, C-line, and g-line.
This imaging optical system 600 performs focusing by moving the first lens 601, second lens 602, third lens 603, fourth lens 604, and fifth lens 605 as an integrated unit in the optical axis direction.

EXAMPLE 7

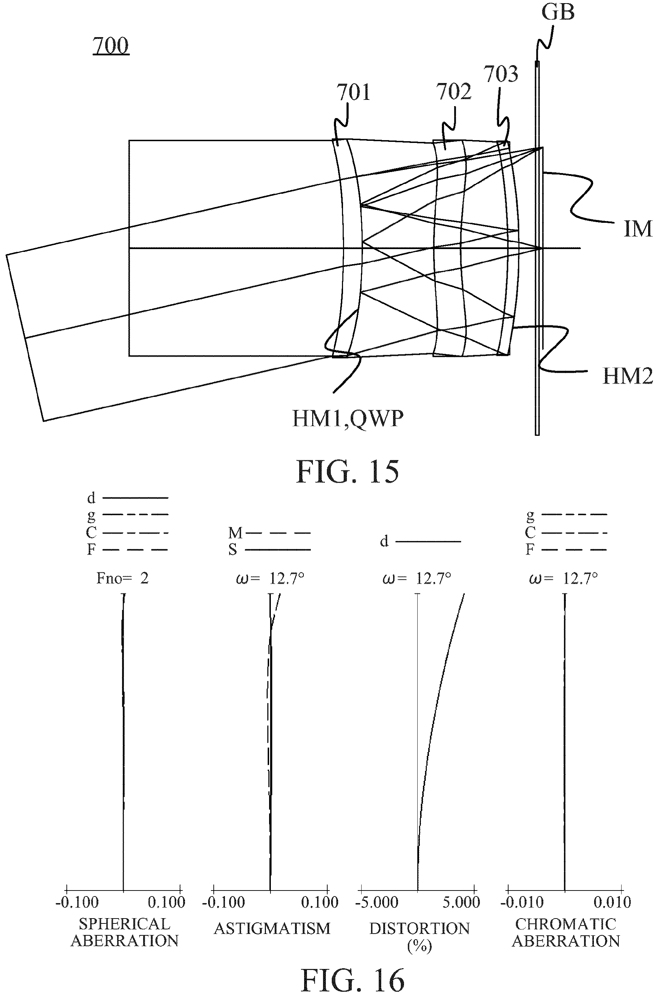

An imaging optical system 700 according to Example 7 will be described with reference to FIG. 15. FIG. 15 is a sectional view of the imaging optical system 700. The imaging optical system 700 includes, in order from the object side to the image side, a first lens 701 having a first transmissive reflective surface HM1, a second lens 702, a third lens 703 having a second transmissive reflective surface HM2, and a sensor protective glass GB. The first lens 701 includes a quarter waveplate QWP on the image side of the first transmissive reflective surface HM1.
FIG. 16 is an aberration diagram when the imaging optical system 700 is in an in-focus state at infinity, at the wavelengths for the d-line, F-line, C-line, and g-line.
This imaging optical system 700 performs focusing by moving the first lens 701, second lens 702, and third lens 703 as an integrated unit in the optical axis direction. Focusing may also be performed by moving the third lens 703.

EXAMPLE 8

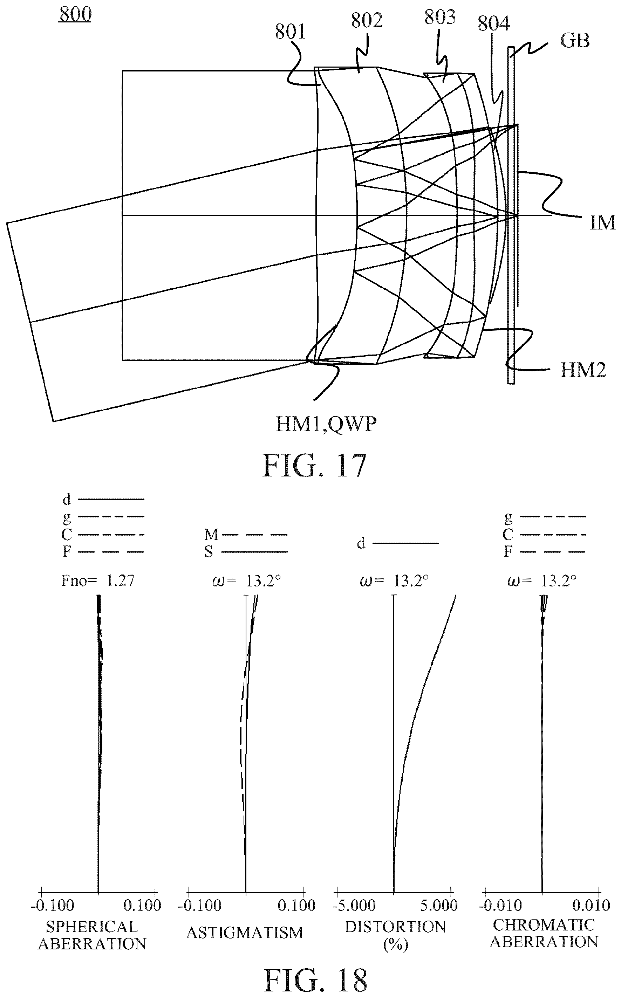

An imaging optical system 800 according to Example 8 will be described With reference to FIG. 17. FIG. 17 is a sectional view of the imaging optical system 800. The imaging optical system 800 includes, in order from the object side to the image side, a cemented lens in which a first lens 801 having a first transmissive reflective surface HM1 and a second lens 802 are integrated in this order, a third lens 803, a fourth lens 804 having a second transmissive reflective surface HM2, and a sensor protective glass GB. The first lens 801 includes a quarter waveplate QWP on the image side of the first transmissive reflective surface HM1.
FIG. 18 is an aberration diagram when the imaging optical system 800 is in an in-focus state at infinity, at the wavelengths for the d-line, F-line, C-line, and g-line.

This imaging optical system 800 performs focusing by moving the first lens 801, the second lens 802, the third lens 803, and the fourth lens 804 as an integrated unit in the optical axis direction.

EXAMPLE 9

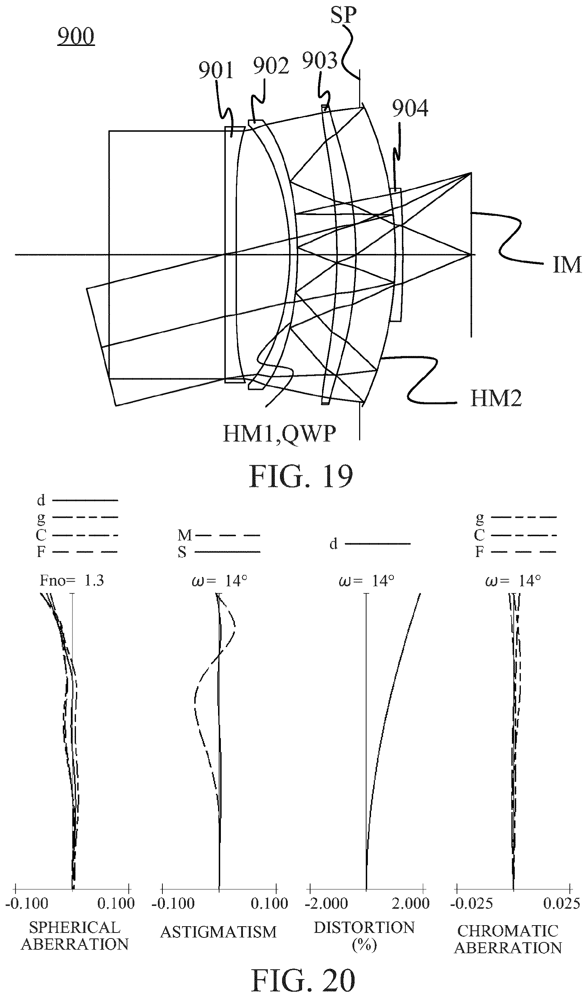

An imaging optical system 900 according to Example 9 will be described with reference to FIG. 19. FIG. 19 is a sectional view of the imaging optical system 900. The imaging optical system 900 includes, in order from the object side to the image side, a first lens 901, a second lens 902 having a first transmissive reflective surface HM1, a third lens 903, an aperture stop SP, and a fourth lens 904 having a second transmissive reflective surface HM2. The second lens 902 includes a quarter waveplate QWP on the image side of the first transmissive reflective surface HM1.

FIG. 20 is an aberration diagram when the imaging optical system 900 is in an in-focus state at infinity, at the wavelengths of the d-line, F-line, C-line, and g-line.

This imaging optical system 900 performs focusing by moving the first lens 901, the second lens 902, the third lens 903, and the fourth lens 904 as an integrated unit in the optical axis direction.

EXAMPLE 10

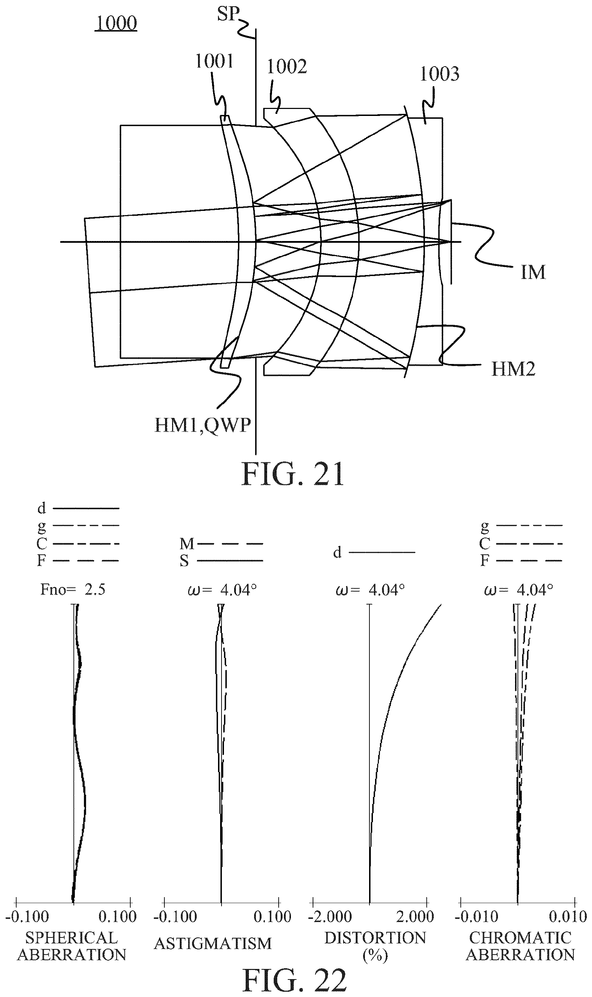

An imaging optical system 1000 according to Example 10 will be described with reference to FIG. 21. FIG. 21 is a sectional view of the imaging optical system 1000. The imaging optical system 1000 includes, in order from the object side to the image side, a first lens 1001 having a first transmissive reflective surface HM1, an aperture stop SP, a second lens 1002, and a third lens 1003 having a second transmissive reflective surface HM2. The first lens 1001 includes a quarter waveplate QWP on the image side of the first transmissive reflective surface HM1.

FIG. 22 is an aberration diagram when the imaging optical system 1000 is in an in-focus state at infinity, at the wavelengths of the d-line, F-line, C-line, and g-line.

This imaging optical system 1000 performs focusing by moving the first lens 1001, the second lens 1002, and the third lens 1003 as an integrated unit in the optical axis direction.

EXAMPLE 11

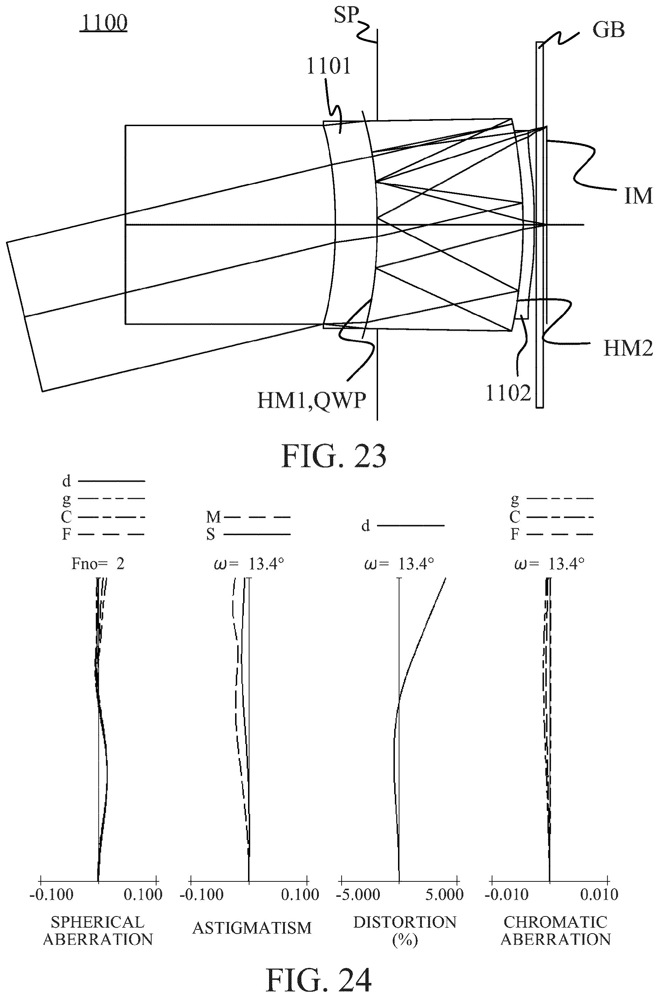

An imaging optical system 1100 according to Example 11 will be described with reference to FIG. 23. FIG. 23 is a sectional view of the imaging optical system 1100. The imaging optical system 1100 includes, in order from the object side to the image side, a first lens 1101 having a first transmissive reflective surface HM1, an aperture stop SP, a second lens 1102 having a second transmissive reflective surface HM2, and a sensor protective glass GB. The first lens 1101 includes a quarter waveplate QWP on the image side of the first transmissive reflective surface HM1.

FIG. 24 illustrates an aberration diagram when the imaging optical system 1100 is in an in-focus state at infinity, at the wavelengths of the d-line, F-line, C-line, and g-line.

This imaging optical system 1100 performs focusing by moving the first lens 1101 and the second lens 1102 as an integrated unit in the optical axis direction.

EXAMPLE 12

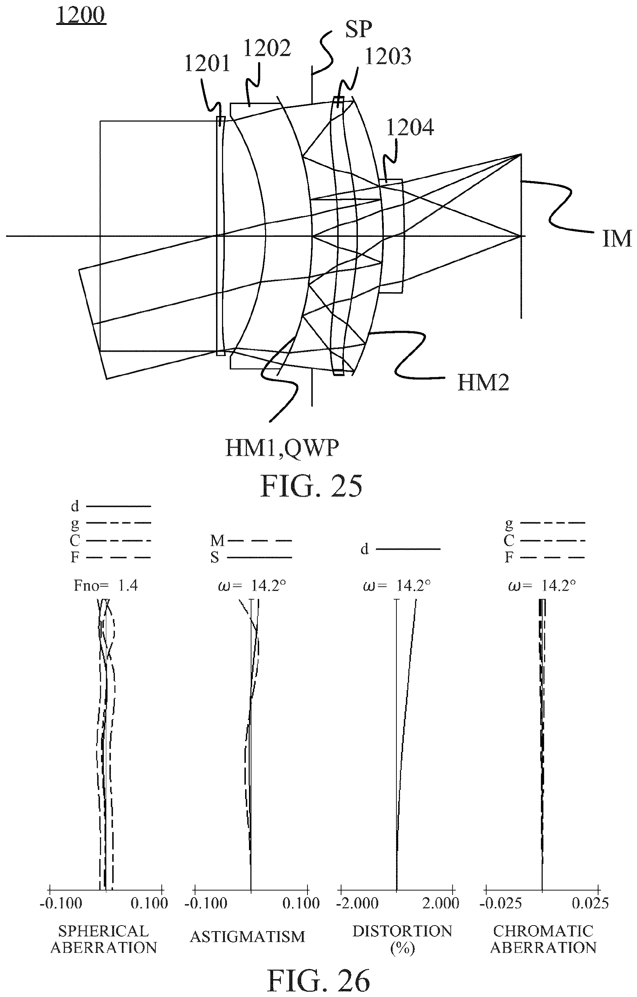

An imaging optical system 1200 according to Example 12 will be described with reference to FIG. 25. FIG. 25 is a sectional view of the imaging optical system 1200. The imaging optical system 1200 includes, in order from the object side to the image side, a first lens 1201, a second lens 1202 having a first transmissive reflective surface HM1, an aperture stop SP, a third lens 1203, and a fourth lens 1204 having a second transmissive reflective surface HM2. The second lens 1202 includes a quarter waveplate QWP on the image side of the first transmissive reflective surface HM1.

FIG. 26 illustrates aberration diagrams when the imaging optical system 1200 is in an in-focus state at infinity, at the wavelengths of the d-line, F-line, C-line, and g-line.

This imaging optical system 1200 performs focusing by moving the first lens 1201, second lens 1202, third lens 1203, and fourth lens 1204 as an integrated unit in the optical axis direction.

Numerical examples 1 to 12 corresponding to Examples 1 to 12 respectively will be illustrated below. In surface data of each numerical example, surface number i indicates an i-th surface along the optical path counted from the object side. r represents a radius of curvature (mm) of an i-th surface, d represents a lens thickness or air gap (mm) between i-th and (i+1)-th surfaces, and nd is a refractive index for the d-line of an material of the i-th optical component. vd is an Abbe number based on the d-line of the material of the i-th optical component. The Abbe number vd is expressed as:

$$\nu d = (Nd-1)/(NF-NC)$$

where Nd, NF, and NC are the refractive indices at the d-line (587.6 nm), F-line (486.1 nm), and C-line (656.3 nm) in the Fraunhofer lines. The refractive index and Abbe number are omitted for regions where the medium is air.

An asterisk "*" next to a surface number means that the surface has an aspheric shape. The aspheric shape is expressed by the following equation where x is a displacement amount in the optical axis direction at a position at a height h from the optical axis based on a surface vertex, R is a paraxial radius of curvature, k is a conic constant, and Ai (i=2, 4, 6, 8...) are aspheric coefficients of each order:

$$x(h) = \frac{\left(\frac{h^2}{r}\right)}{1+\sqrt{\left\{1-(1+k)\left(\frac{h}{r}\right)^2\right\}}} + A_2 h^2 + A_4 h^4 + A_6 h^6 + A_8 h^8 + A_{10} h^{10} + \cdots$$

The effective diameter is provided for each of the first transmissive reflective surface and the second transmissive reflective surface. At this time, these transmissive reflective surfaces act on a light ray multiple times, but the diameter that is the largest effective diameter among them is provided.

A variety of data also indicate a focal length (mm), F-number, half angle of view (°), image height (mm), etc. An overall lens length here represents an overall length of the optical path before and after reflection by the optical surface. The "distance on the optical axis" in each of the above conditional expressions does not illustrate an optical path length including the reflected optical path, but illustrates a physical distance on the optical axis.

NUMERICAL EXAMPLE 1

UNIT: mm

SURFACE DATA

| Surface No. | r | d | nd | vd | Effective Diameter |
|---|---|---|---|---|---|
| 1* | -18.387 | 0.75 | 1.54658 | 55.9 | |
| 2* | -15.290 | 1.09 | | | 5.74 |
| 3* | -8301.893 | 1.75 | 1.54658 | 55.9 | |
| 4* | 32.231 | 1.09 | | | |
| 5* | -12.715 | -1.09 | | | 5.37 |
| 6* | 32.231 | -1.75 | 1.54658 | 55.9 | |
| 7* | -8301.893 | -1.09 | | | |
| 8* | -15.290 | 1.09 | | | |
| 9* | -8301.893 | 1.75 | 1.54658 | 55.9 | |
| 10* | 32.231 | 1.09 | | | |
| 11* | -12.715 | 0.32 | 1.54658 | 55.9 | |
| 12* | 24.036 | 0.05 | | | |
| 13 | ∞ | 0.20 | 1.51633 | 64.1 | |
| 14 | ∞ | (Variable) | | | |
| Image Plane | ∞ | | | | |

ASPHERIC DATA

1st Surface

K = 0.00000e+00 A 2= 2.93156e-02 A4=-2.44711e-04

A 6=-9.53633e-05 A 8= 3.71660e-07

2nd Surface

K = 0.00000e+00 A 4=-1.19829e-03 A 6=-1.21820e-04
A 8= 6.09483e-06 A10=-1.20923e-07

3rd Surface

K = 0.00000e+00 A 4=-4.35935e-03 A 6=-6.60834e-05
A 8=-1.18728e-06 A10= 1.31629e-06 A12=-4.73569e-08

4th Surface

K = 0.00000e+00 A 4=-3.41190e-03 A 6= 1.89881e-05
A 8=-2.44660e-06 A10= 6.47853e-07

5th Surface

K = 0.00000e+00 A 4= 1.93169e-05 A 6=-1.00030e-05
A 8= 4.60648e-06 A10=-4.74183e-07 A12= 8.23996e-09

6th Surface

K = 0.00000e+00 A 4=-3.41190e-03 A 6= 1.89881e-05
A 8=-2.44660e-06 A10= 6.47853e-07

7th Surface

K = 0.00000e+00 A 4=-4.35935e-03 A 6=-6.60834e-05
A 8=-1.18728e-06 A10= 1.31629e-06 A12=-4.73569e-08

8th Surface

K = 0.00000e+00 A 4=-1.19829e-03 A 6=-1.21820e-04
A 8= 6.09483e-06 A10=-1.20923e-07

9th Surface

K = 0.00000e+00 A 4=-4.35935e-03 A 6=-6.60834e-05
A 8=-1.18728e-06 A10= 1.31629e-06 A12=-4.73569e-08

10th Surface

K = 0.00000e+00 A 4=-3.41190e-03 A 6= 1.89881e-05
A 8=-2.44660e-06 A10= 6.47853e-07

11th Surface

K = 0.00000e+00 A 4= 1.93169e-05 A 6=-1.00030e-05
A 8= 4.60648e-06 A10=-4.74183e-07 A12= 8.23996e-09

12th Surface

K = 0.00000e+00 A 2=-6.31717e-02 A 4=-2.01465e-02
A 6= 3.87149e-03 A 8=-2.23890e-04

VARIOUS DATA

| Focal Length | 10.27 |
|---|---|
| Fno | 1.80 |
| Half Angle of View (°) | 14.73 |
| Image Height | 2.70 |
| Overall Lens Length | 13.21 |
| BF | 0.10 |
| d14 | 0.10 |

| Entrance Pupil Position | 0.00 |
|---|---|
| Exit Pupil Position | -7.82 |
| Front Principal-Point Position | -3.05 |
| Rear Principal-Point Position | -10.17 |

SINGLE LENS DATA

| Lens | Starting Surface | Focal Length |
|---|---|---|
| 1 | 1 | 26.30 |
| 2 | 3 | -58.74 |
| 3 | 6 | -58.74 |
| 4 | 9 | -58.74 |
| 5 | 11 | 267.01 |
| 6 | 13 | 0.00 |

NUMERICAL EXAMPLE 2

UNIT: mm

SURFACE DATA

| Surface No. | r | d | nd | vd | Effective Diameter |
|---|---|---|---|---|---|
| 1* | -22.719 | 0.89 | 1.54658 | 55.9 | |
| 2* | -12.674 | 2.06 | | | 8.50 |
| 3* | -82.066 | 0.89 | 1.54658 | 55.9 | |
| 4* | 260.016 | 0.99 | | | |
| 5* | -28.026 | -0.99 | | | 8.78 |
| 6* | 260.016 | -0.89 | 1.54658 | 55.9 | |
| 7* | -82.066 | -2.06 | | | |
| 8* | -12.674 | 2.06 | | | |
| 9* | -82.066 | 0.89 | 1.54658 | | 55.9 |
| 10* | 260.016 | 0.99 | | | |
| 11* | -28.026 | 0.30 | 1.54658 | | 55.9 |
| 12* | 3.059 | 0.07 | | | |
| 13 | ∞ | 0.20 | 1.51633 | | 64.1 |
| 14 | ∞ | (Variable) | | | |

(continued)

| Surface No. | r | d | nd | vd | Effective Diameter |
|---|---|---|---|---|---|
| Image Plane | ∞ | | | | |

ASPHERIC DATA

1st Surface
K = 0.00000e+00 A 2= 6.44766e-03 A 4=-2.00927e-03
A 6=-3.97094e-05 A 8=-3.63375e-10
2nd Surface

K = 0.00000e+00 A 2= 5.44285e-03 A 4=-1.31498e-03
A 6=-5.55271e-05 A 8= 1.13341e-06 A10=-1.84643e-08

3rd Surface

K = 0.00000e+00 A 4= 7.82567e-04 A 6=-1.40770e-04
A 8= 3.13547e-06 A10=-1.31494e-07 A12= 3.12347e-10

4th Surface

K = 0.00000e+00 A 4= 3.11322e-04 A 6=-1.02677e-04
A 8= 1.74990e-06 A10=-1.75766e-08

5th Surface

K = 0.00000e+00 A 2=-2.02253e-02 A 4=-1.15206e-04
A 6=-2.11799e-06 A 8= 5.06262e-07 A10=-3.28619e-08
A12= 5.43529e-10

6th Surface

K = 0.00000e+00 A 4= 3.11322e-04 A 6=-1.02677e-04
A 8= 1.74990e-06 A10=-1.75766e-08

7th Surface

K = 0.00000e+00 A 4= 7.82567e-04 A 6=-1.40770e-04
A 8= 3.13547e-06 A10=-1.31494e-07 A12= 3.12347e-10

8th Surface

K = 0.00000e+00 A 2= 5.44285e-03 A 4=-1.31498e-03
A 6=-5.55271e-05 A 8= 1.13341e-06 A10=-1.84643e-08

9th Surface

K = 0.00000e+00 A4=7.82567e-04 A 6=-1.40770e-04
A 8= 3.13547e-06 A10=-1.31494e-07 A12= 3.12347e-10

10th Surface

K = 0.00000e+00 A 4= 3.11322e-04 A 6=-1.02677e-04
A 8= 1.74990e-06 A10=-1.75766e-08

11th Surface

K = 0.00000e+00 A 2=-2.02253e-02 A 4=-1.15206e-04
A 6=-2.11799e-06 A 8= 5.06262e-07 A10=-3.28619e-08
A12= 5.43529e-10

12th Surface

K = 0.00000e+00 A 2=-2.14048e-01 A 4=-5.68547e-03
A 6= 1.10815e-03 A 8=-1.66701e-04

VARIOUS DATA

| | |
|---|---|
| ZOOM RATIO | 1.00 |
| Focal Length | 10.59 |
| Fno | 1.30 |
| Half Angle of View (°) | 14.30 |
| Image Height | 2.70 |
| Overall Lens Length | 13.39 |
| BF | 0.10 |
| d14 | 0.10 |
| | |
| Entrance Pupil Position | 4.39 |
| Exit Pupil Position | -6.95 |
| Front Principal-Point Position | -0.94 |
| Rear Principal-Point Position | -10.49 |

SINGLE LENS DATA

| Lens | Starting Surface | Focal Length |
|---|---|---|
| 1 | 1 | 48.71 |
| 2 | 3 | -114.02 |
| 3 | 6 | -114.02 |
| 4 | 9 | -114.02 |
| 5 | 11 | 70.66 |
| 6 | 13 | 0.00 |

NUMERICAL EXAMPLE 3

UNIT: mm

SURFACE DATA

| Surface No. | r | d | nd | vd | Effective Diameter |
|---|---|---|---|---|---|
| 1* | 3.914 | 0.74 | 1.54658 | 55.9 | |
| 2* | 15.583 | 1.58 | | | |
| 3 (SP) | ∞ | 0.50 | | | |

(continued)

| Surface No. | r | d | nd | vd | Effective Diameter |
|---|---|---|---|---|---|
| 4* | -13.030 | 0.51 | 1.54658 | 55.9 | |
| 5 | -10.033 | 1.24 | | | |
| 6* | -13.927 | 0.50 | 1.54658 | 55.9 | |
| 7* | -17.172 | 1.24 | | | |
| 8 | -9.966 | -1.24 | | | |
| 9* | -17.172 | -0.50 | 1.54658 | 55.9 | |
| 10* | -13.927 | -1.24 | | | |
| 11 | -10.033 | 1.24 | | | 6.05 |
| 12* | -13.927 | 0.50 | 1.54658 | 55.9 | |
| 13* | -17.172 | 1.24 | | | |
| 14 | -9.966 | 0.30 | 1.54658 | 55.9 | 7.57 |
| 15 | -8.324 | 0.05 | | | |
| 16 | ∞ | 0.24 | 1.51633 | 64.1 | |
| 17 | ∞ | (Variable) | | | |
| Image Plane | ∞ | | | | |

ASPHERIC DATA

1st Surface

K = 0.00000e+00 A 2=-9.35147e-02 A 4=-7.52625e-03
A 6=-2.21557e-04 A 8= 1.07810e-05

2nd Surface

K = 0.00000e+00 A 4=-5.74115e-03 A 6=-8.84359e-05
A 8= 1.76716e-05

4th Surface

K = 0.00000e+00 A 4= 4.10588e-04 A 6=-4.73325e-05
A 8= 4.02713e-06

6th Surface

K = 0.00000e+00 A 4=-1.03372e-03 A 6= 2.09064e-04
A 8= 2.54380e-06 A10=-9.43289e-08 A12=-4.31995e-09

7th Surface

K = 0.00000e+00 A 4=-5.62087e-04 A 6= 1.60507e-04
A 8= 8.13802e-07 A10=-1.76377e-09

9th Surface

K = 0.00000e+00 A 4=-5.62087e-04 A 6= 1.60507e-04
A 8= 8.13802e-07 A10=-1.76377e-09

10th Surface

K = 0.00000e+00 A 4=-1.03372e-03 A 6= 2.09064e-04

A 8= 2.54380e-06 A10=-9.43289e-08 A12=-4.31995e-09

12th Surface

K = 0.00000e+00 A 4=-1.03372e-03 A 6= 2.09064e-04
A 8= 2.54380e-06 A10=-9.43289e-08 A12=-4.31995e-09

13th Surface

K = 0.00000e+00 A 4=-5.62087e-04 A 6= 1.60507e-04
A 8= 8.13802e-07 A10=-1.76377e-09

VARIOUS DATA

| | |
|---|---|
| ZOOM RATIO | 1.00 |
| Focal Length | 8.47 |
| Fno | 1.60 |
| Half Angle of View (°) | 26.36 |
| Image Height | 4.20 |
| Overall Lens Length | 12.96 |
| BF | 0.10 |
| d17 | 0.10 |

| | |
|---|---|
| Entrance Pupil Position | 2.13 |
| Exit Pupil Position | -7.62 |
| Front Principal-Point Position | 1.30 |
| Rear Principal-Point Position | -8.37 |

SINGLE LENS DATA

| Lens | Starting Surface | Focal Length |
|---|---|---|
| 1 | 1 | 337.90 |
| 2 | 4 | 75.23 |
| 3 | 6 | -142.63 |
| 4 | 9 | -142.63 |
| 5 | 12 | -142.63 |
| 6 | 14 | 86.82 |
| 7 | 16 | 0.00 |

NUMERICAL EXAMPLE 4

UNIT: mm

SURFACE DATA

| Surface No. | r | d | nd | vd | Effective Diameter |
|---|---|---|---|---|---|
| 1* | 68.386 | 0.80 | 1.54658 | 55.9 | |

(continued)

| Surface No. | r | d | nd | vd | Effective Diameter |
|---|---|---|---|---|---|
| 2* | 7.172 | 0.50 | | | |
| 3 (SP) | ∞ | 0.30 | | | |
| 4* | -13.308 | 0.67 | 1.54658 | 55.9 | |
| 5* | -9.143 | 1.35 | | | 5.43 |
| 6* | -20.388 | 0.50 | 1.54658 | 55.9 | |
| 7* | -27.474 | 0.70 | | | |
| 8* | -8.603 | -0.70 | | | |
| 9* | -27.474 | -0.50 | 1.54658 | 55.9 | |
| 10* | -20.388 | -1.35 | | | |
| 11* | -9.143 | 1.35 | | | |
| 12* | -20.388 | 0.50 | 1.54658 | 55.9 | |
| 13* | -27.474 | 0.70 | | | |
| 14* | -8.603 | 0.33 | 1.54658 | 55.9 | 6.36 |
| 15* | -3.597 | 0.05 | | | |
| 16 | ∞ | 0.20 | 1.51633 | 64.1 | |
| 17 | ∞ | (Variable) | | | |
| Image Plane | ∞ | | | | |

ASPHERIC DATA

1st Surface

K = 0.00000e+00 A 2= 5.83310e-02 A 4=-4.68852e-03
A 6=-7.18937e-04 A 8= 5.20323e-05

2nd Surface

K = 0.00000e+00 A 4=-3.80340e-03 A 6=-8.66114e-04
A 8= 8.49003e-05

4th Surface

K = 0.00000e+00 A 4= 2.52338e-03 A 6=-2.59547e-04
A 8= 1.40104e-05

5th Surface

K = 0.00000e+00 A 4=-4.92829e-04 A 6=-3.13893e-05
A 8=-3.08591e-06 A10=-5.51250e-07

6th Surface

K = 0.00000e+00 A 4=-6.93674e-03 A 6= 6.41759e-04
A 8=-9.88404e-05 A10= 1.12955e-05 A12=-2.96339e-07

7th Surface

K = 0.00000e+00 A 4=-5.75763e-03 A 6= 6.07633e-04
A 8=-7.35934e-05 A10= 5.38917e-06

8th Surface

K = 0.00000e+00 A 4= 2.32593e-04 A 6=-4.77838e-05
A 8= 4.51163e-06 A10= 2.68794e-07 A12=-4.53602e-08

9th Surface

K = 0.00000e+00 A 4=-5.75763e-03 A 6= 6.07633e-04
A 8=-7.35934e-05 A10= 5.38917e-06

10th Surface

K = 0.00000e+00 A 4=-6.93674e-03 A 6= 6.41759e-04
A 8=-9.88404e-05 A10= 1.12955e-05 A12=-2.96339e-07

11th Surface

K = 0.00000e+00 A 4=-4.92829e-04 A 6=-3.13893e-05
A 8=-3.08591e-06 A10=-5.51250e-07

12th Surface

K = 0.00000e+00 A 4=-6.93674e-03 A 6= 6.41759e-04
A 8=-9.88404e-05 A10= 1.12955e-05 A12=-2.96339e-07

13th Surface

K = 0.00000e+00 A 4=-5.75763e-03 A 6= 6.07633e-04
A 8=-7.35934e-05 A10= 5.38917e-06

14th Surface

K = 0.00000e+00 A 4= 2.32593e-04 A 6=-4.77838e-05
A 8= 4.51163e-06 A10= 2.68794e-07 A12=-4.53602e-08

15th Surface

K = 0.00000e+00 A 2= 5.07013e-02 A 4= 9.71519e-03
A 6=-5.83288e-04 A 8= 2.09748e-05

VARIOUS DATA

| | |
|---|---|
| ZOOM RATIO | 1.00 |
| Focal Length | 7.21 |
| Fno | 1.40 |
| Half Angle of View (°) | 25.90 |
| Image Height | 3.50 |
| Overall Lens Length | 10.60 |
| BF | 0.10 |
| d17 | 0.10 |

| | |
|---|---|
| Entrance Pupil Position | 1.08 |
| Exit Pupil Position | -7.76 |
| Front Principal-Point Position | 1.67 |
| Rear Principal-Point Position | -7.11 |

SINGLE LENS DATA

| Lens | Starting Surface | Focal Length |
|------|------------------|--------------|
| 1 | 1 | -612.98 |
| 2 | 4 | 50.58 |
| 3 | 6 | -148.32 |
| 4 | 9 | -148.32 |
| 5 | 12 | -148.32 |
| 6 | 14 | 29.14 |
| 7 | 16 | 0.00 |

NUMERICAL EXAMPLE 5

UNIT: mm

SURFACE DATA

| Surface No. | r | d | nd | vd | Effective Diameter |
|-------------|---------|------------|---------|------|--------------------|
| 1* | 5.166 | 0.50 | 1.54658 | 55.9 | |
| 2* | -227.218 | 0.20 | | | |
| 3 (SP) | ∞ | 1.53 | | | |
| 4* | -4.855 | 0.52 | 1.54658 | 55.9 | |
| 5* | -6.356 | 0.89 | | | |
| 6* | -5.135 | 0.50 | 1.54658 | 55.9 | |
| 7* | -5.533 | 0.72 | | | |
| 8* | -6.902 | -0.72 | | | 6.24 |
| 9* | -5.533 | -0.50 | 1.54658 | 55.9 | |
| 10* | -5.135 | -0.89 | | | |
| 11* | -6.356 | 0.89 | | | 7.00 |
| 12* | -5.135 | 0.50 | 1.54658 | 55.9 | |
| 13* | -5.533 | 0.72 | | | |
| 14* | -6.902 | 0.30 | 1.54658 | 55.9 | |
| 15* | -4.854 | 0.04 | | | |
| 16 | ∞ | 0.20 | 1.51633 | 64.1 | |
| 17 | ∞ | (Variable) | | | |
| Image Plane | ∞ | | | | |

ASPHERIC DATA

1st Surface

K = 0.00000e+00 A 2=-7.03524e-02 A 4=-1.39437e-02
A 6=-9.52179e-04 A 8=-3.90902e-05 A10= 2.66067e-06
A12= 1.31574e-08

2nd Surface

K = 0.00000e+00 A 4=-1.49638e-02 A 6=-8.77799e-04
A 8= 1.03612e-04 A10=-1.00467e-05 A12= 7.47849e-07

4th Surface

K = 0.00000e+00 A 4=-6.80839e-03 A 6= 4.69122e-04
A 8= 8.21024e-05

5th Surface

K = 0.00000e+00 A 4=-2.32860e-03 A 6= 2.20307e-04
A 8= 4.54969e-06 A10=-5.17761e-07

6th Surface

K = 0.00000e+00 A 4= 8.72885e-03 A 6=-6.45244e-04
A 8=-2.44843e-05 A10= 5.63144e-06 A12=-1.87955e-07

7th Surface

K = 0.00000e+00 A 4= 5.50577e-03 A 6=-2.62192e-04
A 8=-1.37424e-05 A10= 1.11199e-06

8th Surface

K = 0.00000e+00 A4=-3.18341e-05 A 6= 1.78016e-05
A 8=-4.11465e-06 A10= 6.26657e-07 A12=-1.73006e-08

9th Surface

K = 0.00000e+00 A 4= 5.50577e-03 A 6=-2.62192e-04
A 8=-1.37424e-05 A10= 1.11199e-06

10th Surface

K = 0.00000e+00 A 4= 8.72885e-03 A 6=-6.45244e-04
A 8=-2.44843e-05 A10= 5.63144e-06 A12=-1.87955e-07

11th Surface

K = 0.00000e+00 A 4=-2.32860e-03 A 6= 2.20307e-04
A 8= 4.54969e-06 A10=-5.17761e-07

12th Surface

K = 0.00000e+00 A 4= 8.72885e-03 A 6=-6.45244e-04
A 8=-2.44843e-05 A10= 5.63144e-06 A12=-1.87955e-07

13th Surface

K = 0.00000e+00 A 4= 5.50577e-03 A 6=-2.62192e-04
A 8=-1.37424e-05 A10= 1.11199e-06

14th Surface

K = 0.00000e+00 A 4=-3.18341e-05 A 6= 1.78016e-05
A 8=-4.11465e-06 A10= 6.26657e-07 A12=-1.73006e-08

15th Surface

K = 0.00000e+00 A 2= 5.50201e-02 A 4= 9.90886e-03
A 6=-5.77224e-04 A 8= 1.23735e-05

VARIOUS DATA

| | |
|---|---|
| ZOOM RATIO | 1.00 |
| Focal Length | 6.20 |
| Fno | 1.80 |
| Half Angle of View (°) | 29.44 |
| Image Height | 3.50 |
| Overall Lens Length | 9.72 |
| BF | 0.10 |
| d17 | 0.10 |

| | |
|---|---|
| Entrance Pupil Position | 0.53 |
| Exit Pupil Position | -5.52 |
| Front Principal-Point Position | -0.11 |
| Rear Principal-Point Position | -6.10 |

ZOOM LENS UNIT DATA

| Lens Unit | Starting Surface | Focal Length | Lens Construction Length | Front Principal-Point Position | Rear Principal-Point Position |
|---|---|---|---|---|---|
| 1 | 1 | 6.20 | 5.40 | -0.11 | -6.10 |

SINGLE LENS DATA

| Lens | Starting Surface | Focal Length |
|---|---|---|
| 1 | 1 | 31.96 |
| 2 | 4 | -42.81 |
| 3 | 6 | -235.28 |
| 4 | 9 | -235.28 |
| 5 | 12 | -235.28 |
| 6 | 14 | -38.54 |
| 7 | 16 | 0.00 |

NUMERICAL EXAMPLE 6

UNIT: mm

SURFACE DATA

| Surface No. | r | d | nd | vd | Effective Diameter |
|---|---|---|---|---|---|
| 1* | 6.834 | 1.74 | 1.54658 | 55.9 | |
| 2* | 16.378 | 3.81 | | | |
| 3 (SP) | ∞ | 0.88 | | | |
| 4* | -14.196 | 1.71 | 1.54658 | 55.9 | |
| 5* | 301.447 | 0.63 | | | |
| 6* | -11.034 | 0.30 | 1.54658 | 55.9 | |
| 7* | -9.238 | 0.96 | | | |
| 8* | -17.165 | 0.88 | 1.54658 | 55.9 | |
| 9* | -12.889 | 0.82 | | | |
| 10* | -9.043 | -0.82 | | | |
| 11* | -12.889 | -0.88 | 1.54658 | 55.9 | |
| 12* | -17.165 | -0.96 | | | |
| 13* | -9.238 | 0.96 | | | 9.60 |
| 14* | -17.165 | 0.88 | 1.54658 | 55.9 | |
| 15* | -12.889 | 0.82 | | | |
| 16* | -9.043 | 0.56 | 1.54658 | 55.9 | 12.37 |
| 17* | -7.283 | 0.05 | | | |
| 18 | ∞ | 0.43 | 1.51633 | 64.1 | |
| 19 | ∞ | (Variable) | | | |
| Image Plane | ∞ | | | | |

ASPHERIC DATA

1st Surface

K = 0.00000e+00 A 2=-2.76193e-02 A 4=-1.48482e-04
A 6=-3.44041e-07 A 8= 4.05757e-09 A10=-1.32702e-10
A12= 7.47796e-13

2nd Surface

K = 0.00000e+00 A 4= 2.35488e-04 A 6= 5.10752e-06
A 8=-5.19375e-08 A10= 4.95941e-09 A12=-8.12477e-11

4th Surface

K = 0.00000e+00 A 4=-1.40363e-03 A 6=-2.20005e-07
A 8=-7.57564e-07 A10= 2.69338e-08

5th Surface

K = 0.00000e+00 A 4=-8.83456e-04 A 6= 6.59973e-06
A 8=-6.72884e-07

6th Surface

K = 0.00000e+00 A 4=-8.94061e-04 A 6= 6.01317e-06
A 8=-1.92247e-06

7th Surface

K = 0.00000e+00 A 4=-4.09096e-04 A 6= 2.80743e-06

A 8=-2.80466e-07 A10=1.11480e-08

8th Surface

K = 0.00000e+00 A 4= 2.59434e-04 A 6=-2.40538e-05
A 8= 8.94418e-07 A10=-1.99380e-08 A12= 9.77907e-11

9th Surface

K = 0.00000e+00 A 4= 1.36420e-04 A 6=-2.18568e-05
A 8= 7.88464e-07 A10=-1.32052e-08

10th Surface

K = 0.00000e+00 A 4=-6.16694e-05 A 6= 3.13305e-06
A 8=-9.19933e-08 A10=-9.29122e-10 A12= 5.19478e-11

11th Surface

K = 0.00000e+00 A 4= 1.36420e-04 A 6=-2.18568e-05
A 8= 7.88464e-07 A10=-1.32052e-08

12th Surface

K = 0.00000e+00 A 4= 2.59434e-04 A 6=-2.40538e-05
A 8= 8.94418e-07 A10=-1.99380e-08 A12= 9.77907e-11

13th Surface

K = 0.00000e+00 A 4=-4.09096e-04 A 6= 2.80743e-06
A 8=-2.80466e-07 A10= 1.11480e-08

14th Surface

K = 0.00000e+00 A 4= 2.59434e-04 A 6=-2.40538e-05
A 8= 8.94418e-07 A10=-1.99380e-08 A12= 9.77907e-11

15th Surface

K = 0.00000e+00 A 4= 1.36420e-04 A 6=-2.18568e-05
A 8= 7.88464e-07 A10=-1.32052e-08

16th Surface

K = 0.00000e+00 A 4=-6.16694e-05 A 6= 3.13305e-06
A 8=-9.19933e-08 A10=-9.29122e-10 A12= 5.19478e-11

17th Surface

K = 0.00000e+00 A 2= 2.20836e-02 A 4= 1.76117e-03
A 6=-3.85080e-05 A 8= 1.93218e-07

VARIOUS DATA

ZOOM RATIO          1.00

(continued)

| | |
|---|---|
| Focal Length | 7.80 |
| Fno | 1.40 |
| Half Angle of View (°) | 45.43 |
| Image Height | 7.92 |
| Overall Lens Length | 18.18 |
| BF | 0.10 |
| d19 | 0.10 |

| | |
|---|---|
| Entrance Pupil Position | 5.80 |
| Exit Pupil Position | -10.35 |
| Front Principal-Point Position | 7.78 |
| Rear Principal-Point Position | -7.70 |

SINGLE LENS DATA

| Lens | Starting Surface | Focal Length |
|---|---|---|
| 1 | 1 | 54.70 |
| 2 | 4 | -24.76 |
| 3 | 6 | 98.04 |
| 4 | 8 | 88.27 |
| 5 | 11 | 88.27 |
| 6 | 14 | 88.27 |
| 7 | 16 | -118.86 |
| 8 | 18 | 0.00 |

NUMERICAL EXAMPLE 7

UNIT: mm

SURFACE DATA

| Surface No. | r | d | nd | vd | Effective Diameter |
|---|---|---|---|---|---|
| 1* | 8.971 | 0.51 | 1.54658 | 55.9 | |
| 2* | -13.788 | 1.92 | | | 5.84 |
| 3* | 11.942 | 0.72 | 1.54658 | 55.9 | |
| 4* | 9.720 | 1.27 | | | |
| 5* | 33.053 | 0.30 | 1.54658 | 55.9 | |
| 6* | -13.481 | -0.30 | | | 5.73 |
| 7* | 33.053 | -1.27 | | | |
| 8* | 9.720 | -0.72 | 1.54658 | | 55.9 |
| 9* | 11.942 | -1.92 | | | |
| 10* | -13.788 | 1.92 | | | |
| 11* | 11.942 | 0.72 | 1.54658 | | 55.9 |
| 12* | 9.720 | 1.27 | | | |
| 13* | 33.053 | 0.30 | 1.54658 | | 55.9 |
| 14* | -13.481 | 0.44 | | | |
| 15 | ∞ | 0.10 | 1.51633 | | 64.1 |

(continued)

| Surface No. | r | d | nd | vd | Effective Diameter |
|---|---|---|---|---|---|
| 16 | ∞ | (Variable) | | | |
| Image Plane | ∞ | | | | |

ASPHERIC DATA

1st Surface

K = 0.00000e+00 A 2=-7.91546e-02 A 4=-1.36693e-03
A 6=-2.46324e-05 A 8=-2.09970e-06

2nd Surface

K = 0.00000e+00 A 4=-1.07656e-03 A 6=-3.90324e-05
A 8=-6.35705e-07 A10=-4.59773e-08

3rd Surface

K = 0.00000e+00 A 4=-2.72817e-03 A 6=-4.29541e-04
A 8= 5.58439e-06 A10= 9.86298e-07 A12=-8.89788e-08

4th Surface

K = 0.00000e+00 A 4=-1.98197e-03 A 6=-5.38358e-04
A 8= 7.88237e-06 A10= 2.92046e-07

5th Surface

K = 0.00000e+00 A 2=-4.96450e-02 A 4= 6.33648e-04
A 6= 5.09842e-05 A 8=-1.67185e-05 A10=-9.37608e-07
A12= 7.64872e-08

6th Surface

K = 0.00000e+00 A 4=-4.16257e-05 A 6= 3.80574e-05
A 8=-3.61205e-06

7th Surface

K = 0.00000e+00 A 2=-4.96450e-02 A 4= 6.33648e-04
A 6= 5.09842e-05 A 8=-1.67185e-05 A10=-9.37608e-07
A12= 7.64872e-08

8th Surface

K = 0.00000e+00 A 4=-1.98197e-03 A 6=-5.38358e-04
A 8= 7.88237e-06 A10= 2.92046e-07

9th Surface

K = 0.00000e+00 A 4=-2.72817e-03 A 6=-4.29541 e-04
A 8= 5.58439e-06 A10= 9.86298e-07 A12=-8.89788e-08

10th Surface

K = 0.00000e+00 A 4=-1.07656e-03 A 6=-3.90324e-05
A 8=-6.35705e-07 A10=-4.59773e-08

11th Surface

K = 0.00000e+00 A 4=-2.72817e-03 A 6=-4.29541e-04
A 8= 5.58439e-06 A10= 9.86298e-07 A12=-8.89788e-08

12th Surface

K = 0.00000e+00 A 4=-1.98197e-03 A 6=-5.38358e-04
A 8= 7.88237e-06 A10= 2.92046e-07

13th Surface

K = 0.00000e+00 A 2=-4.96450e-02 A 4= 6.33648e-04
A 6= 5.09842e-05 A 8=-1.67185e-05 A10=-9.37608e-07
A12= 7.64872e-08

14th Surface

K = 0.00000e+00 A 4=-4.16257e-05 A 6= 3.80574e-05
A 8=-3.61205e-06

VARIOUS DATA

| | |
|---|---|
| ZOOM RATIO | 1.00 |
| Focal Length | 11.52 |
| Fno | 2.00 |
| Half Angle of View (°) | 13.19 |
| Image Height | 2.70 |
| Overall Lens Length | 13.76 |
| BF | 0.10 |
| d16 | 0.10 |

| | |
|---|---|
| Entrance Pupil Position | 0.00 |
| Exit Pupil Position | -8.58 |
| Front Principal-Point Position | -3.78 |
| Rear Principal-Point Position | -11.42 |

SINGLE LENS DATA

| Lens | Starting Surface | Focal Length |
|---|---|---|
| 1 | 1 | 69.57 |
| 2 | 3 | -107.93 |
| 3 | 5 | 321.77 |
| 4 | 6 | 321.77 |
| 5 | 8 | -107.93 |
| 6 | 11 | -107.93 |
| 7 | 13 | 321.77 |

(continued)

| Lens | Starting Surface | Focal Length |
|------|------------------|--------------|
| 8 | 15 | 0.00 |

NUMERICAL EXAMPLE 8

UNIT: mm

SURFACE DATA

| Surface No. | r | d | nd | vd | Effective Diameter |
|-------------|---------|------------|---------|------|--------------------|
| 1* | 53.826 | 1.23 | 1.54658 | 55.9 | |
| 2* | -15.124 | 1.47 | 1.54658 | 55.9 | 8.62 |
| 3* | 7.123 | 1.50 | | | |
| 4* | -43.348 | 0.50 | 1.54658 | 55.9 | |
| 5* | 37.381 | 0.70 | | | |
| 6* | -13.133 | -0.70 | | | 8.41 |
| 7* | 37.381 | -0.50 | 1.54658 | 55.9 | |
| 8* | -43.348 | -1.50 | | | |
| 9* | 7.123 | -1.47 | 1.54658 | 55.9 | |
| 10* | -15.124 | 1.47 | | | |
| 11* | 7.123 | 1.50 | | | |
| 12* | -43.348 | 0.50 | 1.54658 | 55.9 | |
| 13* | 37.381 | 0.70 | | | |
| 14* | -13.133 | 0.25 | 1.54658 | 55.9 | |
| 15* | 3.332 | 0.05 | | | |
| 16 | ∞ | 0.20 | 1.51633 | 64.1 | |
| 17 | ∞ | (Variable) | | | |
| Image Plane | | | | | ∞ |

ASPHERIC DATA

1st Surface

K = 0.00000e+00 A 2= 2.78605e-03 A 4=-7.25744e-04
A 6=-7.51303e-07 A 8=-1.74988e-07

2nd Surface

K = 0.00000e+00 A 4=-1.43237e-03 A 6=-4.13680e-05
A 8=-8.70457e-06 A10= 5.72952e-07

3rd Surface

K = 0.00000e+00 A 2=-1.04474e-01 A 4=-1.19801e-03
A 6= 2.88680e-05 A 8=-1.49038e-06 A10= 1.78478e-08

4th Surface

K = 0.00000e+00 A 4=-3.80060e-03 A 6= 2.50706e-04

A 8=-1.42146e-05 A10= 2.21897e-07 A12= 9.88712e-10

5th Surface

K = 0.00000e+00 A4=-3.70781e-03 A 6= 1.97247e-04
A 8=-9.83150e-06 A10= 1.76891e-07

6th Surface

K = 0.00000e+00 A 4=-5.34069e-05 A 6= 2.02098e-05
A 8=-2.25255e-06 A10= 1.01424e-07 A12=-1.76046e-09

7th Surface

K = 0.00000e+00 A 4=-3.70781e-03 A 6= 1.97247e-04
A 8=-9.83150e-06 A10= 1.76891e-07

8th Surface

K = 0.00000e+00 A 4=-3.80060e-03 A 6= 2.50706e-04
A 8=-1.42146e-05 A10= 2.21897e-07 A12= 9.88712e-10

9th Surface

K = 0.00000e+00 A 2=-1.04474e-01 A 4=-1.19801e-03
A 6= 2.88680e-05 A 8=-1.49038e-06 A10= 1.78478e-08

10th Surface

K = 0.00000e+00 A 4=-1.43237e-03 A 6=-4.13680e-05
A 8=-8.70457e-06 A10= 5.72952e-07

11th Surface

K = 0.00000e+00 A 2=-1.04474e-01 A 4=-1.19801e-03
A 6= 2.88680e-05 A 8=-1.49038e-06 A10= 1.78478e-08

12th Surface

K = 0.00000e+00 A 4=-3.80060e-03 A 6= 2.50706e-04
A 8=-1.42146e-05 A10= 2.21897e-07 A12= 9.88712e-10

13th Surface

K = 0.00000e+00 A 4=-3.70781e-03 A 6= 1.97247e-04
A 8=-9.83150e-06 A10= 1.76891e-07

14th Surface

K = 0.00000e+00 A 4=-5.34069e-05 A 6= 2.02098e-05
A 8=-2.25255e-06 A10= 1.01424e-07 A12=-1.76046e-09

15th Surface

K = 0.00000e+00 A 2=-2.31030e-01 A 4=-2.51324e-03
A 6= 4.11608e-04 A 8=-7.78731e-05

VARIOUS DATA

| | |
|---|---|
| ZOOM RATIO | 1.00 |
| Focal Length | 10.88 |
| Fno | 1.27 |
| Half Angle of View (°) | 13.93 |
| Image Height | 2.70 |
| Overall Lens Length | 14.35 |
| BF | 0.10 |
| d17 | 0.10 |

| | |
|---|---|
| Entrance Pupil Position | 0.00 |
| Exit Pupil Position | -11.46 |
| Front Principal-Point Position | 0.64 |
| Rear Principal-Point Position | -10.78 |

SINGLE LENS DATA

| Lens | Starting Surface | Focal Length |
|---|---|---|
| 1 | 1 | 20.42 |
| 2 | 2 | 381.42 |
| 3 | 4 | -36.64 |
| 4 | 7 | -36.64 |
| 5 | 9 | 381.42 |
| 6 | 10 | 381.42 |
| 7 | 12 | -36.64 |
| 8 | 14 | 21.07 |
| 9 | 16 | 0.00 |

NUMERICAL EXAMPLE 9

UNIT: mm

SURFACE DATA

| Surface No. | r | d | nd | vd | Effective Diameter |
|---|---|---|---|---|---|
| 1 | ∞ | 3.00 | 1.51633 | 64.1 | |
| 2* | -1434.771 | 14.15 | | | |
| 3* | -41.770 | 2.00 | 1.51633 | 64.1 | |
| 4* | -99.590 | 10.42 | | | 68.73 |
| 5* | -153.014 | 5.00 | 1.51633 | 64.1 | |
| 6* | -100.989 | 1.00 | | | |
| 7 (SP) | ∞ | 9.42 | | | |
| 8* | -99.468 | -10.42 | | | 77.86 |
| 9* | -100.989 | -5.00 | 1.51633 | 64.1 | |
| 10* | -153.014 | -10.42 | | | |

(continued)

| Surface No. | r | d | nd | vd | Effective Diameter |
|---|---|---|---|---|---|
| 11* | -99.590 | 10.42 | | | |
| 12* | -153.014 | 5.00 | 1.51633 | 64.1 | |
| 13* | -100.989 | 10.42 | | | |
| 14* | -99.468 | 2.00 | 1.63000 | 23.0 | |
| 15* | -24.734 | (Variable) | | | |
| Image Plane | ∞ | | | | |

ASPHERIC DATA

2nd Surface

K = 0.00000e+00 A 4= 1.69907e-06 A 6= 2.45484e-10
A 8= 9.28970e-14

3rd Surface

K = 0.00000e+00 A 2= 4.34450e-03 A 4= 2.18108e-06
A 6=-7.80950e-10 A 8=-7.12257e-15 A10= 7.10332e-17

4th Surface

K = 0.00000e+00 A 4=-4.67132e-07 A 6=-7.88299e-10
A 8=-1.27088e-13

5th Surface
K = 0.00000e+00 A 4=-3.13196e-07 A 6= 5.03601e-10
6th Surface
K = 0.00000e+00 A 4=-5.55144e-07 A 6= 5.69192e-10
8th Surface

K = 0.00000e+00 A 4= 8.19095e-08 A 6=-1.48267e-10
A 8= 1.14673e-14

9th Surface
K = 0.00000e+00 A 4=-5.55144e-07 A 6= 5.69192e-10
10th Surface
K = 0.00000e+00 A 4=-3.13196e-07 A 6= 5.03601e-10
11th Surface

K = 0.00000e+00 A 4=-4.67132e-07 A 6=-7.88299e-10
A 8=-1.27088e-13

12th Surface
K = 0.00000e+00 A 4=-3.13196e-07 A 6= 5.03601e-10
13th Surface
K = 0.00000e+00 A 4=-5.55144e-07 A 6= 5.69192e-10
14th Surface

K = 0.00000e+00 A 4= 8.19095e-08 A 6=-1.48267e-10
A 8= 1.14673e-14

15th Surface

K = 0.00000e+00 A 2= 1.79319e-02 A 4= 1.06521e-05
A 6= 2.74699e-09 A 8= 1.71134e-11

VARIOUS DATA

| | |
|---|---|
| ZOOM RATIO | 1.00 |
| Focal Length | 85.00 |
| Fno | 1.30 |
| Half Angle of View (°) | 14.28 |
| Image Height | 21.64 |
| Overall Lens Length | 116.69 |
| BF | 18.00 |
| d15 | 18.00 |

| | |
|---|---|
| Entrance Pupil Position | 31.58 |
| Exit Pupil Position | -42.85 |
| Front Principal-Point Position | -2.14 |
| Rear Principal-Point Position | -67.00 |

SINGLE LENS DATA

| Lens | Starting Surface | Focal Length |
|---|---|---|
| 1 | 1 | 2778.79 |
| 2 | 3 | -379.29 |
| 3 | 5 | 557.03 |
| 4 | 9 | 557.03 |
| 5 | 12 | 557.03 |
| 6 | 14 | -291.18 |

NUMERICAL EXAMPLE 10

UNIT: mm

SURFACE DATA

| Surface No. | r | d | nd | vd | Effective Diameter |
|---|---|---|---|---|---|
| 1* | -43.660 | 1.80 | 1.51633 | 64.1 | |
| 2* | -29.645 | 0.00 | | | 24.13 |
| 3 (SP) | ∞ | 6.75 | | | |
| 4* | -17.570 | 3.94 | 1.51633 | 64.1 | |
| 5* | -22.957 | 6.75 | | | |
| 6* | -49.963 | -6.75 | | | 26.22 |
| 7* | -22.957 | -3.94 | 1.51633 | 64.1 | |
| 8* | -17.570 | -6.75 | | | |
| 9* | -29.645 | 6.75 | | | |
| 10* | -17.570 | 3.94 | 1.51633 | 64.1 | |

(continued)

| Surface No. | r | d | nd | vd | Effective Diameter |
|---|---|---|---|---|---|
| 11* | -22.957 | 6.75 | | | |
| 12* | -49.963 | 1.50 | 1.49700 | 81.5 | |
| 13* | -5.903 | (Variable) | | | |
| Image Plane | ∞ | | | | |

ASPHERIC DATA

1st Surface

K = 0.00000e+00 A 4=-3.13162e-05 A 6= 2.05836e-07
A 8= 2.98848e-12

2nd Surface
K = 0.00000e+00 A 4=-3.45367e-05 A 6= 2.43905e-07
4th Surface
K = 0.00000e+00 A 4=-4.30902e-05 A 6= 1.64429e-07
5th Surface
K = 0.00000e+00 A 4=-2.24284e-05 A 6= 3.63609e-08
6th Surface

K = 0.00000e+00 A 4=-2.25614e-06 A 6= 1.02617e-08
A 8=-1.71753e-11

7th Surface
K = 0.00000e+00 A 4=-2.24284e-05 A 6= 3.63609e-08
8th Surface
K = 0.00000e+00 A 4=-4.30902e-05 A 6= 1.64429e-07
9th Surface
K = 0.00000e+00 A 4=-3.45367e-05 A 6= 2.43905e-07
10th Surface
K = 0.00000e+00 A 4=-4.30902e-05 A 6= 1.64429e-07
11th Surface
K = 0.00000e+00 A 4=-2.24284e-05 A 6= 3.63609e-08
12th Surface

K = 0.00000e+00 A 4=-2.25614e-06 A 6= 1.02617e-08
A 8=-1.71753e-11

13th Surface

K = 0.00000e+00 A 2= 9.42718e-02 A 4= 7.17789e-04
A 6= 1.90716e-05 A 8= 6.74039e-07

VARIOUS DATA

| | |
|---|---|
| ZOOM RATIO | 1.00 |
| Focal Length | 60.00 |
| Fno | 2.50 |
| Half Angle of View (°) | 4.14 |
| Image Height | 4.34 |

(continued)

| | |
|---|---|
| Overall Lens Length | 56.85 |
| BF | 1.27 |
| d13 | 1.27 |

| | |
|---|---|
| Entrance Pupil Position | 1.17 |
| Exit Pupil Position | -18.83 |
| Front Principal-Point Position | -117.87 |
| Rear Principal-Point Position | -58.73 |

SINGLE LENS DATA

| Lens | Starting Surface | Focal Length |
|---|---|---|
| 1 | 1 | 171.37 |
| 2 | 4 | -193.03 |
| 3 | 7 | -193.03 |
| 4 | 10 | -193.03 |
| 5 | 12 | -51.15 |

NUMERICAL EXAMPLE 11

UNIT: mm

SURFACE DATA

| No. | r | d | nd | vd | Effective Diameter |
|---|---|---|---|---|---|
| Surface 1* | -43.660 | 1.80 | 1.51633 | 64.1 | |
| 2* | -29.645 | 0.00 | | | 24.13 |
| 3 (SP) | ∞ | 6.75 | | | |
| 4* | -17.570 | 3.94 | 1.51633 | 64.1 | 23.59 |
| 5* | -22.957 | 6.75 | | | |
| 6* | -49.963 | -6.75 | | | |
| 7* | -22.957 | -3.94 | 1.51633 | 64.1 | |
| 8* | -17.570 | -6.75 | | | |
| 9* | -29.645 | 6.75 | | | |
| 10* | -17.570 | 3.94 | 1.51633 | 64.1 | |
| 11* | -22.957 | 6.75 | | | |
| 12* | -49.963 | 1.50 | 1.49700 | 81.5 | |
| 13* | -5.903 | (Variable) | | | |
| Image Plane | ∞ | | | | |

ASPHERIC DATA

1st Surface

K = 0.00000e+00 A 4=-3.13162e-05 A 6= 2.05836e-07
A 8= 2.98848e-12

2nd Surface
K = 0.00000e+00 A 4=-3.45367e-05 A 6= 2.43905e-07
4th Surface
K = 0.00000e+00 A 4=-4.30902e-05 A 6= 1.64429e-07
5th Surface
K = 0.00000e+00 A 4=-2.24284e-05 A 6= 3.63609e-08
6th Surface

K = 0.00000e+00 A 4=-2.25614e-06 A 6= 1.02617e-08
A 8=-1.71753e-11

7th Surface
K = 0.00000e+00 A 4=-2.24284e-05 A 6= 3.63609e-08
8th Surface
K = 0.00000e+00 A 4=-4.30902e-05 A 6= 1.64429e-07
9th Surface
K = 0.00000e+00 A 4=-3.45367e-05 A 6= 2.43905e-07
10th Surface
K = 0.00000e+00 A 4=-4.30902e-05 A 6= 1.64429e-07
11th Surface
K = 0.00000e+00 A 4=-2.24284e-05 A 6= 3.63609e-08
12th Surface

K = 0.00000e+00 A 4=-2.25614e-06 A 6= 1.02617e-08
A 8=-1.71753e-11

13th Surface

K = 0.00000e+00 A 2= 9.42718e-02 A 4= 7.17789e-04
A 6= 1.90716e-05 A 8= 6.74039e-07

VARIOUS DATA

| ZOOM RATIO | 1.00 |
|---|---|
| Focal Length | 60.00 |
| Fno | 2.50 |
| Half Angle of View (°) | 4.14 |
| Image Height | 4.34 |
| Overall Lens Length | 56.85 |
| BF | 1.27 |
| d13 | 1.27 |

| Entrance Pupil Position | 1.17 |
|---|---|
| Exit Pupil Position | -18.83 |
| Front Principal-Point Position | -117.87 |
| Rear Principal-Point Position | -58.73 |

SINGLE LENS DATA

| Lens | Starting Surface | Focal Length |
|---|---|---|
| 1 | 1 | 171.37 |
| 2 | 4 | -193.03 |
| 3 | 7 | -193.03 |
| 4 | 10 | -193.03 |
| 5 | 12 | -51.15 |

NUMERICAL EXAMPLE 12

UNIT: mm

SURFACE DATA

| Surface No. | r | d | nd | vd | Effective Diameter |
|---|---|---|---|---|---|
| 1 | ∞ | 2.00 | 1.51633 | 64.1 | |
| 2* | -220.765 | 10.83 | | | |
| 3* | -48.226 | 12.25 | 1.51633 | 64.1 | |
| 4* | -90.765 | 0.00 | | | 67.74 |
| 5 (SP) | ∞ | 6.85 | | | |
| 6* | -114.978 | 5.00 | 1.51633 | 64.1 | |
| 7* | -84.663 | 6.85 | | | |
| 8* | -89.921 | -6.85 | | | 71.34 |
| 9* | -84.663 | -5.00 | | 1.51633 | 64.1 |
| 10* | -114.978 | -6.85 | | | |
| 11* | -90.765 | 6.85 | | | |
| 12* | -114.978 | 5.00 | | 1.51633 | 64.1 |
| 13* | -84.663 | 6.85 | | | |
| 14* | -89.921 | 5.55 | | 1.63000 | 23.0 |
| 15* | -26.894 | (Variable) | | | |
| Image Plane | ∞ | | | | |

ASPHERIC DATA

2nd Surface

K = 0.00000e+00 A 4= 2.62580e-06 A 6=-1.15117e-10
A 8= 3.59052e-14

3rd Surface

K = 0.00000e+00 A 2= 1.28550e-03 A 4= 3.33294e-06
A 6=-2.69495e-09
A 8= 7.26662e-13 A10= 3.26603e-17

4th Surface

K = 0.00000e+00 A 4= 5.86678e-08 A 6=-1.43048e-09
A 8= 5.92180e-13

6th Surface

K = 0.00000e+00 A 4= 1.99021e-06 A 6= 5.49028e-10
7th Surface
K = 0.00000e+00 A 4= 1.52785e-06 A 6= 8.65881e-10
8th Surface

K = 0.00000e+00 A 4= 1.19765e-07 A 6=-1.92249e-10
A 8=-1.57989e-14

9th Surface
K = 0.00000e+00 A 4= 1.52785e-06 A 6= 8.65881e-10
10th Surface
K = 0.00000e+00 A 4= 1.99021e-06 A 6= 5.49028e-10
11th Surface

K = 0.00000e+00 A 4= 5.86678e-08 A 6=-1.43048e-09
A 8= 5.92180e-13

12th Surface
K = 0.00000e+00 A 4= 1.99021e-06 A 6= 5.49028e-10
13th Surface
K = 0.00000e+00 A 4= 1.52785e-06 A 6= 8.65881e-10
14th Surface

K = 0.00000e+00 A 4= 1.19765e-07 A 6=-1.92249e-10
A 8=-1.57989e-14

15th Surface

K = 0.00000e+00 A 2= 1.57692e-02 A 4= 8.16452e-06
A 6= 1.74427e-09 A 8= 9.01082e-12

VARIOUS DATA

| ZOOM RATIO | 1.00 |
|---|---|
| Focal Length | 85.00 |
| Fno | 1.40 |
| Half Angle of View (°) | 14.28 |
| Image Height | 21.64 |
| Overall Lens Length | 117.40 |
| BF | 30.67 |
| d15 | 30.67 |

| Entrance Pupil Position | 20.48 |
|---|---|
| Exit Pupil Position | -41.86 |
| Front Principal-Point Position | 5.86 |
| Rear Principal-Point Position | -54.33 |

SINGLE LENS DATA

| Lens | Starting Surface | Focal Length |
|------|------------------|--------------|
| 1 | 1 | 427.56 |
| 2 | 3 | -306.82 |
| 3 | 6 | 588.84 |
| 4 | 9 | 588.84 |
| 5 | 12 | 588.84 |
| 6 | 14 | -297.19 |

TABLE 1 summarizes a variety of values in conditional expressions in each example.

| Lens | Starting Surface | Focal Length |
|------|------------------|--------------|

TABLE 1

| | | EXAMPLE | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| CONDITIONAL EXPRESSION | (1) | 0.448 | 0.436 | 0.433 | 0.448 | 0.443 | 0.488 | 0.420 | 0.439 | 0.539 | 0.337 | 0.428 | 0.646 |
| | (2) | 0.247 | 0.172 | 0.655 | 0.519 | 0.901 | 2.341 | 0.217 | 0.173 | 0.253 | 0.066 | 0.265 | 0.335 |
| | (3) | 0.521 | 0.519 | 0.552 | 0.582 | 0.773 | 0.938 | 0.464 | 0.551 | 0.346 | 0.367 | 0.534 | 0.646 |
| | (4) | 1.068 | 0.968 | 0.799 | 0.854 | 0.724 | 0.776 | 1.020 | 1.024 | 0.883 | 0.920 | 0.977 | 0.953 |
| | (5) | 0.558 | 0.473 | 0.693 | 0.786 | 0.623 | 0.913 | 0.471 | 0.507 | 0.427 | 0.132 | 0.465 | 0.435 |
| | (6) | 0.126 | 0.122 | 0.099 | 0.124 | 0.116 | 0.089 | 0.120 | 0.100 | 0.308 | 0.126 | 0.112 | 0.453 |
| | (7) | 0.390 | 0.217 | 0.113 | 0.142 | 0.145 | 0.080 | 0.166 | 0.029 | 0.224 | 0.350 | 0.009 | 0.277 |
| | (8) | 0.136 | 0.126 | 0.043 | 0.069 | 0.070 | 0.081 | 0.061 | 0.222 | 0.102 | 0.190 | 0.087 | 0.120 |
| | (9) | 0.137 | 0.132 | 0.409 | 0.371 | 0.500 | 1.672 | 0.109 | 0.137 | 0.195 | 0.027 | 0.133 | 0.240 |
| | (10) | 1.80 | 1.30 | 1.60 | 1.40 | 1.80 | 1.40 | 2.00 | 1.27 | 1.30 | 2.50 | 2.50 | 1.40 |

EP 4 664 178 A1

The imaging optical system according to each example can be used for image pickup apparatuses such as cameras for smartphones, distance detecting cameras, lens fixed type cameras, and disposable film cameras that have an image sensor that receives an image formed by the imaging optical system. The imaging optical system according to each example can also be used for interchangeable lenses for lens interchangeable type cameras. The imaging optical system according to each example can be used for viewfinders in camera and XR devices for, for example, line of sight detection, biometric recognition, and facial expression recognition. In addition, the imaging optical system according to each example can be used for external world recognition applications such as XR devices and automatic robots.

While the preferred embodiments of the present invention have been described above, the present invention is not limited to these embodiments, and various modifications and variations may be made within the scope of its gist.

**Claims**

1. An optical system comprising, in order from an object side to an image side, a first transmissive reflective surface, a quarter waveplate, and a second transmissive reflective surface,

   **characterized in that** the optical system is a primary imaging system,
   wherein light from the object side transmits through the first transmissive reflective surface and the quarter waveplate in this order, is reflected by the second transmissive reflective surface towards the object side, transmits through the quarter waveplate, is reflected by the first transmissive reflective surface towards the image side, transmits through the quarter waveplate and the second transmissive reflective surface in this order, and travels towards the image side, and
   wherein the optical system satisfies the following conditional expression:

   $$0.10 \leq zm1/f \leq 0.68$$

   where $zm1$ is a distance on an optical axis from the first transmissive reflective surface to an image plane, and $f$ is a focal length of the optical system.

2. The optical system according to claim 1, **characterized in that** the conditional expression is satisfied:

   $$0.0 \leq La \times h \times Fno/f2 \leq 2.6$$

   where $La$ is a distance on the optical axis from a lens surface closest to an object to the image plane, $h$ is a radius of an image circle, and $Fno$ is an F-number.

3. The optical system according to claim 1 or 2, **characterized in that** the conditional expression is satisfied:

   $$0.0 \leq La \times h/f2 \leq 2.0$$

   where $La$ is a distance on the optical axis from a lens surface closest to an object to the image plane, and $h$ is a radius of an image circle.

4. The optical system according to any one of claims 1 to 3, **characterized in that** the conditional expression is satisfied:

   $$0.50 \leq \Phi m1/\Phi m2 \leq 1.25$$

   where $\Phi m1$ is a diameter of the first transmissive reflective surface, and $\Phi m2$ is a diameter of the second transmissive reflective surface.

5. The optical system according to any one of claims 1 to 4, **characterized in that** the conditional expression is satisfied:

   $$0.1 \leq h/(\Phi m2/2)/Fno \leq 1.2$$

   where $h$ is a radius of an image circle, $Fno$ is an F-number, and $\Phi m2$ is a diameter of the second transmissive reflective surface.

6. The optical system according to any one of claims 1 to 5, **characterized in that** the conditional expression is satisfied:

$$0.0 \leq zm2/La \leq 0.5$$

where La is a distance on the optical axis from a lens surface closest to an object to the image plane, and zm2 is a distance on the optical axis from the second transmissive reflective surface to the image plane.

7. The optical system according to any one of claims 1 to 6, **characterized in that** the conditional expression is satisfied:

$$0.0 \leq \Phi m1L \times f \leq 1.0$$

where $\Phi$m1L is an absolute value of refractive power of a lens including the second transmissive reflective surface.

8. The optical system according to any one of claims 1 to 7, **characterized in that** the conditional expression is satisfied:

$$0.0 \leq A\Phi r/A\Phi m \leq 0.5$$

where A$\Phi$r is an average absolute value of refractive powers of lenses included in the optical system, and A$\Phi$m is an average absolute value of refractive powers of the first transmissive reflective surface and the second transmissive reflective surface.

9. The optical system according to any one of claims 1 to 8, **characterized in that** one of the first and second transmissive reflective surfaces divides incident light into reflected light and transmitting light according to a polarization state.

10. The optical system according to claim 9, **characterized in that** the other of the first and second transmissive reflective surfaces is a half mirror.

11. The optical system according to any one of claims 1 to 10, **characterized in that** a shape of an effective area of each of a plurality of lens surfaces included in the optical system is rotationally symmetric with respect to the optical axis.

12. The optical system according to any one of claims 1 to 11, further comprising an aperture stop.

13. The optical system according to claim 12, **characterized in that** the conditional expression is satisfied:

$$0.1 \leq zp/f \leq 1.2$$

where zp is a distance on the optical axis from the aperture stop to the image plane.

14. The optical system according to any one of claims 1 to 13, **characterized in that** the conditional expression is satisfied:

$$0.5 \leq Fno \leq 8.0$$

where Fno is an F-number.

15. The optical system according to any one of claims 1 to 14, **characterized in that** at least one of the first and second transmissive reflective surfaces is a flat surface.

16. The optical system according to any one of claims 1 to 15, **characterized in that** the conditional expression is satisfied:

$$-0.25 \leq a22 \leq 0.25$$

$$-0.25 \leq a32 \leq 0.25$$

where a22 is a 2-by-2 element of a Mueller matrix corresponding to the quarter waveplate, and a32 is a 3-by-2 element of the Mueller matrix in a use wavelength band.

**17.** The optical system according to any one of claims 1 to 16, **characterized in that** the conditional expression is satisfied:

$$0.10 \leq zm1/f \leq 0.55.$$

**18.** An image pickup apparatus comprising: an optical system according to any one of claims 1 to 17; and an image sensor configured to receive an image formed by the optical system.

**Amended claims under Art. 19.1 PCT**

**1.** (AMENDED) An optical system comprising, in order from an object side to an image side:

a first transmissive reflective surface;
a polarizing element; and
a second transmissive reflective surface,
**characterized in that** the optical system is a primary imaging system,
wherein light from the object side transmits through the first transmissive reflective surface and the polarizing element in this order, is reflected by the second transmissive reflective surface toward the object side, transmits through the polarizing element, is reflected by the first transmissive reflective surface toward the image side, transmits through the polarizing element and the second transmissive reflective surface in this order, and travels toward the image side, and
wherein the following inequality is satisfied:

$$0.0 \leq A\Phi r/A\Phi m \leq 0.5$$

where A$\Phi$r is an average of absolute values of refractive powers of lenses included in the optical system, and A$\Phi$m is an average of absolute values of refractive powers of the first transmissive reflective surface and the second transmissive reflective surface.

**2.** (AMENDED) The optical system according to claim 1, **characterized in that** the following inequality is satisfied:

$$0.0 \leq La \times h \times Fno/f^2 \leq 2.6$$

where La is a distance on an optical axis from a lens surface closest to an object to an image plane, h is a radius of an image circle for the optical system, Fno is an F-number of the optical system, and f is a focal length of the optical system.

**3.** (AMENDED) The optical system according to claim 1 or 2, **characterized in that** the following inequality is satisfied:

$$0.0 \leq La \times h/f^2 \leq 2.0$$

where La is a distance on an optical axis from a lens surface closest to an object to an image plane, h is a radius of an image circle for the optical system, and f is a focal length of the optical system.

**4.** The optical system according to any one of claims 1 to 3, **characterized in that** the following inequality is satisfied:

$$0.50 \leq \Phi m1/\Phi m2 \leq 1.25$$

where Φm1 is a diameter of the first transmissive reflective surface, and Φm2 is a diameter of the second transmissive reflective surface.

**5.** The optical system according to any one of claims 1 to 4, **characterized in that** the following inequality is satisfied:

$$0.1 \leq h/(\Phi m2/2)/Fno \leq 1.2$$

where h is a radius of an image circle for the optical system, Fno is an F-number of the optical system, and Φm2 is a diameter of the second transmissive reflective surface.

**6.** The optical system according to any one of claims 1 to 5, **characterized in that** the following inequality is satisfied:

$$0.0 \leq zm2/La \leq 0.5$$

where La is a distance on an optical axis from a lens surface closest to an object to an image plane, and zm2 is a distance on the optical axis from the second transmissive reflective surface to the image plane.

**7.** (AMENDED) The optical system according to any one of claims 1 to 6, **characterized in that** the following inequality is satisfied:

$$0.0 \leq \Phi m1L \times f \leq 1.0$$

where Φm1L is an absolute value of refractive power of a lens including the second transmissive reflective surface, and f is a focal length of the optical system.

**8.** DELETED)

**9.** (AMENDED) The optical system according to any one of claims 1 to 7, **characterized in that** one of the first transmissive reflective surface and the second transmissive reflective surface divides incident light into reflected light and transmitting light according to a polarization state.

**10.** The optical system according to claim 9, **characterized in that** the other of the first transmissive reflective surface and the second transmissive reflective surface is a half-mirror.

**11.** The optical system according to any one of claims 1 to 10, **characterized in that** a shape of an effective area of each of a plurality of lens surfaces included in the optical system is rotationally symmetric with respect to an optical axis.

**12.** The optical system according to any one of claims 1 to 11, further comprising an aperture stop.

**13.** (AMENDED) The optical system according to claim 12, **characterized in that** the following inequality is satisfied:

$$0.1 \leq zp/f \leq 1.2$$

where zp is a distance on an optical axis from the aperture stop to an image plane, and f is a focal length of the optical system.

**14.** The optical system according to any one of claims 1 to 13, **characterized in that** the following inequality is satisfied:

$$0.5 \leq Fno \leq 8.0$$

where Fno is an F-number of the optical system.

**15.** The optical system according to any one of claims 1 to 14, **characterized in that** at least one of the first transmissive reflective surface and the second transmissive reflective surface is a flat surface.

**16.** (AMENDED) The optical system according to any one of claims 1 to 14, **characterized in that** the following inequalities are satisfied:

$$-0.25 \leq a22 \leq 0.25$$

$$-0.25 \leq a32 \leq 0.25$$

where a22 is a 2-by-2 element of a Mueller matrix corresponding to the polarizing element, and a32 is a 3-by-2 element of the Mueller matrix corresponding to the polarizing element in a use wavelength band.

**17.** DELETED)

**18.** DELETED)

**19.** ADDED) The optical system according to any one of claims 1 to 15, **characterized in that** the following inequality is satisfied:

$$0.10 \leq zm1/f \leq 0.68$$

where zm1 is a distance on an optical axis from the first transmissive reflective surface to an image plane, and f is a focal length of the optical system.

**20.** ADDED) The optical system according to claim 19, **characterized in that** the following inequality is satisfied:

$$0.10 \leq zm1/f \leq 0.55.$$

**21.** ADDED) An image pickup apparatus comprising:

the optical system according to any one of claims 1 to 20; and
an image sensor configured to receive an image formed by the optical system.

**Statement under Art. 19.1 PCT**

International Application No. : PCT/JP2024/005232
International Filing Date : February 15, 2024
Applicant :

Name: CANON KABUSHIKI KAISHA
Address: 30-2, Shimomaruko 3-chome, Ohta-ku, Tokyo 1468501 Japan Telephone number: +81-3-3758-2111
Agent :
Name: FUJIMOTO, Ryosuke
Address: FUJIMOTO PATENT OFFICE, Chiyoda Building 9th Floor, 6-4, Yurakucho 1-chome, Chiyoda-ku, Tokyo 100-0006 Japan
Telephone number: +81-3-6257-1191
Applicant's File reference: 11026354WO01

Dear Sir/Madam:
The Applicant, who received the International Search Report relating to the above identified International Application transmitted on May 7, 2024, hereby files amendments under Article 19(1) as in the attached sheets.
We hereby would like to amend claims 1 to 3, 7, 9, 13 and 16.
We added new claims 19 to 21 and also canceled claims 8, 17, and 18.
The amended portion of claim 1 is based on paragraph 0063 and current claim 8. The amended portion of claims 2, 3, 7, 9, and 13 is a formal change in accordance with the above amendment. The amended portion of claim 16 is based on paragraph 0063. The new claim 19 is based on the pending claim 1 and paragraph 0018. The new claim 20 is based on the pending claim 17. The new claim 21 is based on the pending claim 18.

The Applicant also files as attached herewith a brief statement explaining the amendment and indicating any impact the amendment might have on the description or the drawings.

Yours faithfully,

/Ryosuke Fujimoto/

Ryosuke Fujimoto

Attachments :

Amendment under Article 19(1) 3 sheets

Brief Statement 1 sheet

EP 4 664 178 A1

FIG. 1

FIG. 2

100

101    102

GB

HM1,QWP

103

IM

HM2

FIG. 3

d ——————
g —— —— ——
C —— · —— ·
F — — —

M — — —
S ——————

d ——————

g —— —— ——
C —— · —— ·
F — — —

Fno= 1.8

ω= 14°

ω= 14°

ω= 14°

-0.100        0.100
SPHERICAL
ABERRATION

-0.100        0.100
ASTIGMATISM

-5.000        5.000
DISTORTION
(%)

-0.010        0.010
CHROMATIC
ABERRATION

FIG. 4

200

201    202    GB

IM

HM2

203

HM1,QWP

FIG. 5

d ———
g ———
C —·—·—
F ———

Fno= 1.3

M ———
S ———

ω= 13.7°

d ———

ω= 13.7°

g ———
C —·—·—
F ———

ω= 13.7°

-0.100    0.100
SPHERICAL
ABERRATION

-0.100    0.100
ASTIGMATISM

-5.000    5.000
DISTORTION
(%)

-0.010    0.010
CHROMATIC
ABERRATION

FIG. 6

300

SP

GB

301

302

IM

HM2

HM1,QWP 304

303

## FIG. 7

d ———
g — — —
C —·—·—
F — — —

M — — —
S ————

d ————

g — — —
C —·—·—
F — — —

Fno= 1.6

ω= 26.3°

ω= 26.3°

ω= 26.3°

-0.100    0.100
SPHERICAL
ABERRATION

-0.100    0.100
ASTIGMATISM

-5.000    5.000
DISTORTION
(%)

-0.010    0.010
CHROMATIC
ABERRATION

## FIG. 8

FIG. 9

| d | —————— |
| g | — - — - |
| C | — ·· — ·· |
| F | — — — |

Fno= 1.4

| M | — — — |
| S | —————— |

ω= 25.1°

| d | —————— |

ω= 25.1°

| g | — - — - |
| C | — ·· — ·· |
| F | — — — |

ω= 25.1°

-0.100   0.100
SPHERICAL
ABERRATION

-0.100   0.100
ASTIGMATISM

-5.000   5.000
DISTORTION
(%)

-0.010   0.010
CHROMATIC
ABERRATION

FIG. 10

500

SP

GB

503 504

502

501

IM

HM2

HM1,QWP

## FIG. 11

d ——————
g — — — — —
C —·— ·— ·—
F — — — —

Fno= 1.8

M — — —
S ————

ω= 28.4°

d ——————

ω= 28.4°

g — — — — —
C —·— ·— ·—
F — — — —

ω= 28.4°

| -0.100 | 0.100 |
|---|---|
| SPHERICAL ABERRATION | |

| -0.100 | 0.100 |
|---|---|
| ASTIGMATISM | |

| -5.000 | 5.000 |
|---|---|
| DISTORTION (%) | |

| -0.010 | 0.010 |
|---|---|
| CHROMATIC ABERRATION | |

## FIG. 12

FIG. 13

FIG. 14

FIG. 15

| | | | |
|---|---|---|---|
| d —— | | | g —— |
| g —— | M —— | | C —— |
| C —— | S —— | d —— | F —— |
| F —— | | | |

Fno= 2    ω= 12.7°    ω= 12.7°    ω= 12.7°

-0.100    0.100    -0.100    0.100    -5.000    5.000    -0.010    0.010

SPHERICAL
ABERRATION

ASTIGMATISM

DISTORTION
(%)

CHROMATIC
ABERRATION

FIG. 16

800    801    802    803    804    GB

IM

HM1,QWP    HM2

## FIG. 17

d ———
g — — —
C —·—·—
F — — —

M — — —
S ————

d ————

g — — —
C —·—·—
F — — —

Fno= 1.27    ω= 13.2°    ω= 13.2°    ω= 13.2°

-0.100    0.100    -0.100    0.100    -5.000    5.000    -0.010    0.010
SPHERICAL
ABERRATION    ASTIGMATISM    DISTORTION
(%)    CHROMATIC
ABERRATION

## FIG. 18

900

901 902 903 SP

904

IM

HM2

HM1,QWP

## FIG. 19

| d | ——— |
| g | — — — |
| C | — · — · — |
| F | — — — |

| M | — — — |
| S | ——— |

| d | ——— |

| g | — — — |
| C | — · — · — |
| F | — — — |

Fno= 1.3          ω= 14°          ω= 14°          ω= 14°

-0.100      0.100    -0.100      0.100    -2.000      2.000    -0.025      0.025

SPHERICAL          ASTIGMATISM        DISTORTION          CHROMATIC
ABERRATION                                (%)            ABERRATION

## FIG. 20

1000

SP

1001  1002  1003

IM

HM2

HM1,QWP

## FIG. 21

d ——————
g — — — —
C —·—·—·—
F — — —

Fno= 2.5

SPHERICAL
ABERRATION

-0.100    0.100

M — — —
S ——————

ω= 4.04°

ASTIGMATISM

-0.100    0.100

d ——————

ω= 4.04°

DISTORTION
(%)

-2.000    2.000

g — — — —
C —·—·—·—
F — — —

ω= 4.04°

CHROMATIC
ABERRATION

-0.010    0.010

## FIG. 22

1100

SP

GB

1101

IM

HM1,QWP

HM2

1102

## FIG. 23

d
g
C
F

M
S

d

g
C
F

Fno= 2

ω= 13.4°

ω= 13.4°

ω= 13.4°

-0.100    0.100

-0.100    0.100

-5.000    5.000

-0.010    0.010

SPHERICAL
ABERRATION

ASTIGMATISM

DISTORTION
(%)

CHROMATIC
ABERRATION

## FIG. 24

1200

FIG. 25

SPHERICAL ABERRATION ASTIGMATISM DISTORTION (%) CHROMATIC ABERRATION

FIG. 26

## INTERNATIONAL SEARCH REPORT

| International application No. |
|---|
| **PCT/JP2024/005232** |

| A. | CLASSIFICATION OF SUBJECT MATTER |
|---|---|

*G02B 17/08*(2006.01)i; *G02B 5/30*(2006.01)i; *G02B 13/18*(2006.01)i
FI:    G02B17/08; G02B5/30; G02B13/18

According to International Patent Classification (IPC) or to both national classification and IPC

| B. | FIELDS SEARCHED |
|---|---|

Minimum documentation searched (classification system followed by classification symbols)

G02B17/08; G02B5/30; G02B13/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2005-352273 A (KONICA MINOLTA OPTO INC.) 22 December 2005 (2005-12-22) examples 1, 8, paragraphs [0001], [0021] | 1, 4-7, 9-18 |
| A | entire text, all drawings | 8 |
| A | JP 7-261088 A (OLYMPUS OPTICAL CO., LTD.) 13 October 1995 (1995-10-13) entire text, all drawings | 1, 4-18 |
| P, X | WO 2023/136167 A1 (KONICA MINOLTA, INC.) 20 July 2023 (2023-07-20) example 3, paragraphs [0002], [0019] | 1, 4-7, 9-14, 16, 18 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
|---|
| **PCT/JP2024/005232** |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☑ Claims Nos.: **2,3**
   because they relate to parts of the international application that do not comply with the prescribed requirements to such an extent that no meaningful international search can be carried out, specifically:

   The meaning of f2 used in the conditional expression set forth in the aforementioned claim(s) is not described or suggested in the specification, etc.

3. ☐ Claims Nos.:
   because they are dependent claims and are not drafted in accordance with the second and third sentences of Rule 6.4(a).

Form PCT/ISA/210 (continuation of first sheet) (July 2022)

## INTERNATIONAL SEARCH REPORT
### Information on patent family members

International application No.

**PCT/JP2024/005232**

| Patent document cited in search report | | | Publication date (day/month/year) | Patent family member(s) | Publication date (day/month/year) |
|---|---|---|---|---|---|
| JP | 2005-352273 | A | 22 December 2005 | (Family: none) | |
| JP | 7-261088 | A | 13 October 1995 | US 5644436 A entire text, all drawings | |
| WO | 2023/136167 | A1 | 20 July 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019156933 A

- JP 2013015712 A

**Non-patent literature cited in the description**

- **YOSHIYA MATSUI**. Introduction to Imaging Optical Systems: Fundamentals of Optical System Management. Japan Optomechatronics Association, 1988, 45-48